# EUROPEAN PATENT APPLICATION

(11) **EP 4 242 065 A1**
(43) Date of publication of application: **13.09.2023**
(21) Application number: 22161681.6
(22) Date of filing: 11.03.2022
(51) Int. Cl.: B60R 9/06, B60R 9/10

(54) **BIKE CARRIER SYSTEM**

(71) Applicant: Thule Sweden AB, 335 04 Hillerstorp (SE)
(72) Inventor: FALK, Hannes, 791 37 Falun (SE); WEAVER, Greg, Waterbury, 06708 (US); ERIKSSON, Henrik, 55448 Jönköping (SE); NILVIUS, Anders, 33135 Värnamo (SE); LARSSON, Johan, 55448 Jönköping (SE); ADLER, Jan, SE-568 31 Skillingaryd (SE); WESEMAN, Kurt, Hamden, 06517 (US); PETERSSON, Maja, 331 33 Värnamo (SE)
(74) Representative: Wallentin, Lars

(57) **Abstract**

The present invention relates to a bike carrier system (10; 100; 200; 400) for rear mounting to a motor vehicle (12), in particular to a tow ball, fix point, hitch coupling and/or rear lid (14). The bike carrier system (10; 100; 200; 400) is configured for adjustment, when mounted to the vehicle (12), between a transport configuration for transporting at least one bike (20) attached to the bike carrier system (10; 100; 200; 400) and a work stand configuration for performing maintenance on at least one bike (20) attached to the bike carrier system (10; 100; 200; 400). The invention also relates to a bike holding device (24; 104; 202; 402) for a bike carrier (16) rear mountable to a motor vehicle (12). Further, the invention relates to a bike stand retrofit kit, a bike carrier (16) and the use of a bike carrier system (10; 100; 200) and/or bike holding device (24; 104; 202; 402).

## Description

### TECHNICAL FIELD

The present invention relates to a bike carrier system for rear mounting to a motor vehicle. The present invention further relates to a bike holding device for a bike carrier rear mountable to a motor vehicle and to a use of a bike carrier system for rear mounting to a motor vehicle and/or a bike holding device for a bike carrier rear mountable to a motor vehicle. In addition, the present invention relates to a bike stand retrofit kit for a bike carrier and to a bike carrier.

### PRIOR ART

A lot of recreational bike users do not only use their bikes starting from home, but also take their bikes with them to distant locations, for example during a vacation. Thus, there is a need to be able to comfortably transport a bike with a car. For this purpose, a wide range of bike carrier systems is available which are rear mountable to a motor vehicle. For example, such bike carrier systems may be configured for mounting to a tow ball, fix point, hitch coupling and/or rear lid of a motor vehicle. Such bike carrier system allows to safely transport one or several bikes at the back side of the motor vehicle. Interior space is thus not required when transporting the bike and soiling an interior of the vehicle with a dirty bike may be avoided. Further, the position of the bike carrier may allow both easy attachment and detachment of bikes to and from the carrier, i.e. loading and unloading of bikes to the bike carrier. Similarly, the position of the bike carrier allows easy attachment and detachment to and from the vehicle.

Ambitious recreational bike use may require bike maintenance immediately prior or after use. For example, a mountain biker may wish to adjust the suspension depending on the obstacles of a trail and/or ambient temperature. As another example, a user may wish to adjust a gear shifter of a racing bike prior to competing in a race. A lot of light duty bike maintenance may be performed by placing a bike in an upside-down position, i.e. placing it on its saddle and handlebar. However, such placement may soil the saddle and potentially misalign or even damage delicate parts of the handlebar. Further, the bike is unstable in said position, so help of a bystander may be required. A lot of maintenance work may also require the user to crouch when working on the upside-down placed bike, which may be uncomfortable. Heavy duty maintenance and precise gear shifter adjustment may even be impossible in the upside-down position. Therefore, a lot of recreational bike users prefer using a bike work stand to perform maintenance on their bike. For example, a bike work stand may be configured to firmly hold a bike in a position with wheels of the bike spaced apart from the ground in one or several positions. Bike maintenance is thus facilitated. However, when travelling with a bike, the bike work stand will require valuable interior or cargo space of the vehicle. Further, dirt on the bike stand, such as oil or mud, may potentially soil the interior of the vehicle.

An example of a bicycle carrier for a vehicle is shown in US 10,668,866 B2.

### SUMMARY OF THE INVENTION

A first aspect relates to a bike carrier system for rear mounting to a motor vehicle, in particular to a tow ball, fix point, hitch coupling and/or rear lid. The rear lid may be pivotable upwards to grant access to an interior of the vehicle from the rear. The rear lid may also be configured as a door type, for example pivoting to the left or right to grant access to an interior of the vehicle from the rear. The bike carrier system may be configured for adjustment, when mounted to the vehicle, between a transport configuration for transporting at least one bike attached to the bike carrier system and a work stand configuration for performing maintenance on at least one bike attached to the bike carrier system. The bike carrier system therefore enables transport of one or more bikes on the outside of a motor vehicle while also providing a work stand functionality. Due to such a bike carrier system, there is no need any more for bike users to carry an additional work stand. When arriving at a destination, maintenance on the bike may be performed using the bike carrier system in the work stand configuration. Maintenance is thus even possible if a user forgets to bring a separate bike work stand or does not have enough cargo space to carry such a bike work stand. Due to the rear mounting of the bike carrier system, loading and unloading bikes to and from the bike carrier system is easy. Further, said position is comfortable for a work stand. In particular, in the work stand configuration, the bike carrier system may be configured to hold the bike in a work position that allows a user to perform most or even all maintenance work standing upright. For example, the bike may be held in such a position that the upper end of its frame is at chest height of a user.

The bike carrier system may be configured to allow adjustment between its configurations without the need to detach any bikes attached thereto. For example, one or several bikes may remain attached to the bike carrier system when adjusting the system from the transport configuration to the work stand configuration. The bike carrier system may be configured such that a bike previously transported with the bike carrier system in a transport position is held by the bike carrier system in a work position that allows maintenance due to adjustment of the bike carrier system from the transport to the work stand configuration. However, the bike carrier system may also be configured in such a way that detachment of one or more bikes is necessary when adjusting its configuration. Alternatively or additionally, the bike carrier system may be configured so that transported bikes may remain attached to the bike carrier system during adjustment of its configuration but in the work stand configuration, an additional bike may be held in a work position. A work position of a bike attached to the bike carrier system may facilitate maintenance, for example by allowing one or all of the wheels of the bike intended for maintenance to freely rotate. By comparison, in the transport configuration, wheels of any bike attached to the bike carrier system in a respective transport position may essentially be held immovably in place.

According to an embodiment of the bike carrier system, in the transport configuration, the bike carrier system is configured for essentially immovably holding the at least one bike. This facilitates safe transport of bikes. For example, the wheels of any transported bike may rest on a platform, being further secured with straps. The frame may be held upright in position with an arm of the bike carrier system that clamps onto a part of the frame.

According to an embodiment of the bike carrier system, in the work stand configuration, the bike carrier system is configured to hold the at least one bike in position against forces acting on the bike during maintenance. Maximum forces during maintenance may be caused by tightening or untightening of screws, for example when mounting or unmounting pedals from a bike frame or a bottom bracket. For example, an arm of the bike carrier system may clamp onto a part of the frame of the bike, a wheel or a seat post to hold the bike in a position spaced apart from the ground and the rest of the bike carrier system. A bike carrier system rear mounted to the vehicle is especially suitable to also act as a work stand since its attachment to the vehicle needs to withstand transport forces, in particular when configured to transport several bikes, such as three or even four bikes. Unlike conventional work stands, the bike carrier system in the work stand configuration has only a low or no risk of toppling during maintenance of the bike. No heavy and/or large base is required to provide secure holding of the bike during maintenance since the bike carrier system is attached to the vehicle rather than standing on the ground.

According to an embodiment of the bike carrier system, in the work stand configuration, the bike carrier system is configured to hold the at least one bike so that at least one of the wheels of the at least one bike is essentially free to rotate around its axle, in particular both of the wheels of the at least one bike. Such a work position of the bike facilitates some maintenance work that is otherwise very difficult to perform, in particular without help by a second person, such as adjusting a gear shifter of the bike. Alternatively or additionally, in the work stand configuration, the bike carrier system is configured to hold the at least one bike so that a front wheel of the at least one bike is essentially free to rotate about a steering axis of the at least one bike. Such a work position of the bike facilitates some maintenance work that is otherwise very difficult to perform, in particular without help by a second person, such as adjusting a position of the handlebars or a bike headset. In the transport configuration, the bike carrier system may prevent rotation of the front wheel about the steering axis of the bike.

According to an embodiment of the bike carrier system, the bike carrier system comprises a bike support platform configured for supporting the at least one bike attached to the system in the transport configuration, in particular with the bike resting with its wheels on the platform. For example, the bike support platform may provide a tray for resting one or several bikes thereon. Wheels of the transported bikes may be nested in corresponding grooves of the bike support platform. The bike support platform securely supports any transported bike, carrying the majority of the weight of each bike. For example, the transported bikes may essentially rest upright on the bike support platform in the transport configuration. The bike carrier system may be configured so that the bike support platform is essentially arranged at a height of a tow ball, hitch coupling or fix point when attached to the vehicle. The bike support platform may comprise a frame to which one or several tray elements are attached, such as plastic or aluminum trays configured to support bike wheels of bikes attached to the bike carrier system in a transport configuration from below.

According to an embodiment of the bike carrier system, the bike support platform is configured for adjustment, in particular for a pivotable adjustment, between at least a first position and a second position. An essentially horizontal position and/or bike transport position may correspond to a first position. A tilted position and/or a vehicle rear lid access position may correspond to the second position. The bike support platform may also be configured for adjustment into a third position. The third position may correspond to a bike loading position. In the bike loading position, loading of bikes onto the tray may be facilitated, for example by lowering of the bike support platform. Alternatively, loading of bikes may be facilitated in the first or second position or by other means, such as by an unfolding ramp. The bike support platform may also be configured for slideable adjustment between at least two of its positions instead of for a pivotable adjustment. For example, with the bike carrier system mounted to the motor vehicle, the bike support platform may be slideable essentially horizontally in a forward-backward direction and/or left-right direction of the motor vehicle.

In the horizontal position, the bike support platform may support bikes from below, for example in an upright position. The tilted position may facilitate unloading bikes from the carrier. For example, also an arm of the bike carrier system clamped to the frame of a bike may be easier to reach in the tilted position. The bike carrier system may be configured so that the tilted position of the bike support with the bike carrier system mounted to the motor vehicle allows opening of a rear lid of the vehicle even with the at least one bike attached to the bike carrier system. Any attached bike may be moved out of the way of an opening path of the rear lid due to the tilting of the bike support platform. When adjusting the bike support platform mounted to the motor vehicle from the essentially horizontal position and/or the bike transport position to the tilted position and/or the vehicle rear lid access position, a vehicle facing side of the bike support platform is tilted upwards and/or a side of the bike support platform opposite the vehicle facing side is tilted downwards. Such a tilting allows a rod element holding the bike in the transport configuration and attached to the bike support platform at an end adjacent the vehicle facing side to be shifted upwards to increase ground clearance for the bike. The work stand function is thus also available for very large bikes. Alternatively or additionally, the bike support platform is tilted away from the rear lid of the vehicle with the bike carrier system mounted to the motor vehicle when adjusting the bike support platform from the essentially horizontal position to the tilted position. A user may thus access the rear of the vehicle even when using the bike carrier system as a work stand, for example to retrieve bike maintenance tools from a trunk.

In an alternative embodiment, the bike support platform is non-adjustable. For example, the bike support platform may be unmovable relative to the vehicle when the bike carrier system is mounted thereto. For example, the bike support platform always has an essentially horizontal position when mounted to the vehicle. Such a bike support platform may be very sturdy and may have a simple construction. For example, such a configuration may have a rigid connection between a device configured for mounting the bike carrier to the vehicle and the bike support platform.

According to an embodiment of the bike carrier system, in the work stand configuration of the bike carrier system, the bike support platform is in the second position, in particular the tilted position, and in the transport configuration of the bike carrier system, the bike support platform is in the first position, in particular the essentially horizontal position. Adjusting the bike carrier system between the transport configuration and the work stand configuration may comprise adjusting the bike support platform between the first position and the second position. In particular, adjustment of the bike carrier system from the transport configuration to the work stand configuration may comprise adjusting the bike support platform from the first position into the second position. For example, adjusting the bike support platform position may cause adjustment of the bike carrier system configuration. Adjusting the configuration of the bike carrier system may thus be fast and intuitive.

According to an embodiment of the bike carrier system, the bike support platform is configured to be tiltable, in particular pivotable, so far that a bike remaining in its transport position is not touching the bike support platform anymore, in particular with the bike already attached to the bike carrier system remaining in position. The platform may thus be tilted so far as to completely disengage the bike. The bike carrier system may thus be adjusted from the transport configuration to the work stand configuration without requiring moving the bike. For maintenance in the work configuration, it may not be necessary to move the bike.

According to an embodiment of the bike carrier system, the bike support platform is pivoted by at least 45°, 70°, 80°, 90°, 130°, 170°, 180°, 190° or even more when adjusting the bike platform between the essentially horizontal position and the tilted position. A large pivoting angle may avoid interference with the bike. Further, a bike holding device (described below), in particular a rod element of the bike holding device (also described below) may be shorter with a larger pivoting angle of the bike support platform, in particular if the pivoting causes the bike holding device to be moved upwards when the bike carrier system is mounted to the vehicle.

According to an embodiment of the bike carrier system, the bike carrier system comprises a bike holding device for attaching the at least one bike to the bike carrier system. The bike holding device may be configured to hold the bike in the work stand configuration of the bike carrier system, in particular spaced away from the bike support platform and/or the ground. The bike holding device may provide the work stand functionality. Additionally or alternatively, the bike holding device may be configured to hold the bike in the transport configuration, in particular upright and/or on the bike support platform, especially in the transport configuration of the bike carrier system. The bike holding device may comprise a bike support arm. The bike holding device may be configured to hold the bike both in the transport configuration and in the work stand configuration. For example, the bike holding device may comprise a bike support arm that is configured to hold the bike both in the transport configuration and in the work stand configuration. The bike support arm may, for example, comprise the rod element, wherein the rod element may be configured to only hold the bike in the work stand configuration or in both the work stand configuration and the transport configuration. The bike holding device may be pivotable, in particular with the bike support arm pivotably attached to the bike support platform. The bike carrier system, in particular the bike support arm, may comprise a locking device to lock pivoting of the bike holding device. The locking device may, for example, be configured for frictional or positive engagement. The locking device may comprise a support rod configured to lock pivoting by releasable attachment of the rod element to another part of the bike holding device or the bike carrier system. The bike holding device may provide the means to secure the bike to the bike carrier system for transport. If the bike holding device is configured to hold a bike both in the transport and in the work stand configuration, less or no additional means to secure and/or hold the bike may not be necessary, resulting in a simple design with few parts. For example, the bike holding device may be configured to hold multiple bikes in the transport configuration and only one bike in the work stand configuration. Alternatively, the bike holding device may be configured to hold only one bike in both the transport configuration and the work stand configuration. In this case, the bike carrier system may comprise additional bike holding devices for attaching additional bikes to the bike carrier system without providing a work stand functionality. Such additional bike holding devices may be configured to only hold bikes in the transport configuration but not in the work stand configuration.

The bike holding device may comprise a rod element. The rod element may allow the bike holding device to hold the bike in several positions, such as the work position and transport position. The rod element may be configured to be moveable relative to the rest of the bike carrier system, in particular to adjust the bike carrier system between the work stand configuration and the transport configuration. For example, the rod element may be pivotably and/or moveably attached to a frame of the bike carrier system or may be configured to be attached to different positions to the frame of the bike carrier system. For example, the rod element may be pivotably and/or moveably attached to the bike support platform or may be configured to be attached to different positions to the bike support platform. For example, the rod element may also be attached to the bike support platform.

Alternatively, the rod element may be pivotably and/or moveably attached to a bike fixation arm. Such a bike fixation arm may comprise an upright rod and a curved rod, wherein the curved rod element may be moveable along the vertical rod to push down on a wheel of the bike for fixation. For example, the rod element may be pivotably attached to an upper end of the upright rod. In a first position, the rod element may extend essentially perpendicular to the upright rod and/or in an essentially horizontal direction and/or away from the rear of the vehicle when the bike carrier system is mounted to the vehicle. The first position may provide the work stand functionality. The first position may be a use position. In a second position, the rod element may, for example, extend substantially parallel to the upright rod. The second position may be a stow position. Such an adjustability of the rod element may provide extra clearance for the bike in the work stand configuration and otherwise not substantially increase the dimension of the bike carrier system in the transport configuration. The upright rod may be pivotably and/or moveably attached to the bike support platform, for example so that the upright rod may be adjusted between a use position, such as at least one upright position in which the rod extends essentially orthogonally upwards from the bike support platform, and a stow position, for example extending substantially parallel to the bike support platform. Additionally, the rod element may be rotatably attached along its lengthwise axis, for example to the upright rod, the frame and/or the bike support platform. Rotating the rod element may allow adjustment of the bike position during maintenance work without detaching the bike from the bike carrier system. For example, this may allow to turn the bike upside down while still being held by the bike carrier system in the work stand configuration.

The bike holding device may also comprise additional rod elements. The rod element may be configured to be moveable relative to the rest of the bike carrier system, in particular to adjust the bike carrier system between the work stand configuration and the transport configuration, or may be moveably attached to another rod element of the bike holding device.

The bike holding device, in particular the rod element of the bike holding device, is attached to the bike support platform at the vehicle facing side of the bike support platform with the bike carrier system mounted to the motor vehicle. Such an attachment allows the rod element to be tilted away from the rear of the vehicle and/or to be shifted upwards when adjusting the bike support platform away from the rear of the vehicle, such as by pivoting and/or sliding. Bike clearance to the ground and/or to the bike support platform can thus be increased when using the bike carrier system in the work stand configuration. Further, bike clearance to the vehicle can be increased, thus avoiding unwanted contact of the bike with the vehicle during maintenance work, which could otherwise scratch the vehicle.

Alternatively, the bike holding device, in particular the rod element of the bike holding device, is attached to the bike support platform at a side of the bike support platform facing away from the vehicle with the bike carrier system mounted to the motor vehicle. Such a side is easier to access if the bike is not detached from the bike carrier system during adjustment from the transport configuration to the work stand configuration. Further, such a location of the bike holding device has a synergy with a non-adjustable bike support platform. In such a configuration, the bike holding device at the side of the bike support platform facing away from the vehicle provides better clearance to the vehicle. The part of the bike holding device configured for holding the bike in the work stand configuration may be an outermost part of the bike holding device relative to the vehicle when the bike carrier system is mounted to the vehicle.

The bike holding device may be configured to be slid along the bike support platform to adjust its position, in particular in the left-right direction when the bike carrier system is mounted to the vehicle. For example, the bike holding device may be adjusted into a central position in the work stand configuration to avoid the bike protruding on the left or right side of the vehicle. In the transport configuration, the bike holding device may be adjusted towards an end section of the bike support platform. Such a position may facilitate the bike holding device, in particular a curved rod of a bike fixation arm, to be pushed down on a wheel of the bike for fixation to the bike carrier system. In such a configuration, an additional fixation element, such as a strap at the bike support platform, may fix the other wheel of the bike to the bike carrier system.

According to an embodiment of the bike carrier system, the bike holding device, in particular the rod element of the bike holding device, is configured to hold the bike further away from the rear of the motor vehicle in the work stand configuration than in the transport configuration of the bike carrier system with the bike carrier system mounted to the motor vehicle. Additionally or alternatively, the bike holding device, in particular the rod element of the bike holding device, extends further away from the rear of the motor vehicle in the work stand configuration than in the transport configuration of the bike carrier system with the bike carrier system mounted to the motor vehicle. For example, in the transport configuration, the rod element may extend essentially vertical, in particular upwards away from the bike support platform. In the work stand configuration, the rod element may extend at an angle to the vertical, in particular away from the rear of the vehicle due to tilting of the bike support platform. Additionally or alternatively, the bike holding device, in particular the rod element of the bike holding device, is arranged higher in the work stand configuration than in the transport configuration of the bike carrier system with the bike carrier system mounted to the motor vehicle, in particular due to adjusting of the bike support platform in the tilted position with the bike carrier system mounted to the motor vehicle. Additionally or alternatively, the bike holding device, in particular the rod element of the bike holding device, extends transverse to a vertical orientation in the work stand configuration with the bike carrier system mounted to the motor vehicle. Additionally or alternatively, the bike holding device, in particular the rod element of the bike holding device, extends essentially vertical in the transport configuration with the bike carrier system mounted to the motor vehicle. Additionally or alternatively, the bike holding device, in particular the rod element of the bike holding device, extends essentially orthogonally to the bike support platform in the transport configuration and/or work stand configuration. Handling of the bike holding device is thus facilitated. If the bike holding device, in particular the rod element, is adjustable between a use position and a stow position (described below), the bike holding device may only extend essentially orthogonally to the bike support platform and/or to hold the bike further away from the rear of the motor vehicle if in its use position.

According to an embodiment of the bike carrier system, the rod element has an irregular cross section, such as a triangular or trapezoidal cross section. Such a design may result in a sturdy rod element. In addition, the irregular shape may prevent other devices and elements of the bike holding device attached to the rod element to rotate around the rod element, helping to reliably hold any bike in place.

According to an embodiment of the bike carrier system, the rod element is extendable, in particular telescopically extendable. The rod element may comprise two or more rod pieces for that purpose. The extendable rod element may facilitate loading of bikes in the work stand configuration of the bike carrier system. Further, a reach of the bike holding device with the extendable rod element may easily be adjusted. In addition, the rod element may be adjusted to a short length, for example by collapsing the telescopically extendable rod element, to avoid interference with bikes in the transport configuration. The extendibility of the rod element may also allow to attach other components of the bike holding device to the rod element at a fixed position while retaining flexibility to adapt to different bike geometries. For example, when adjusted to a long length, the telescopic rod element may hold even large bikes spaced apart from the ground and/or bike support platform in the work stand configuration. For example, when adjusted to a short length, the telescopic rod element may hold the bike upright on the bike support platform in the transport configuration. Moreover, the telescopic rod element may be easily adapted to different bike sizes.

According to an embodiment of the bike carrier system, the bike holding device is configured for adjustment between a use position and a stow position, in particular by pivoting the rod element relative to the bike support platform and/or in particular wherein the bike holding device extends essentially perpendicular away from the bike support platform in the use position and/or in particular wherein the bike holding device extends essentially parallel along the bike support platform in the stow position. For example, a pivot axis of the bike holding device may extend in the forward-backward direction of the vehicle when the bike carrier system is mounted to the vehicle and the bike support platform is in the transport position, if adjustable. For example, the rod element is pivotably attachable to the rest of the bike carrier system, in particular with one end to the bike support platform, on top of a wheel tray, a load wing, or to a bike fixation arm. The rod element may be configured for adjustment between a use position and a storage position. In the use position, the rod element may be arranged to hold the bike in the work stand configuration and/or transport configuration. In the storage position, the rod element may be arranged to avoid interference with bikes. For example, the rod element in the storage position may be arranged adjacent to a section of a frame of the bike carrier system, in particular parallel to the section of the frame of the bike carrier system. Interference with loading and unloading of bikes can thus be avoided. Further, such a position may facilitate space-saving storage of the bike carrier system when not in use. In the storage position, any rod element may be arranged below a bike facing side of the bike support platform.

According to an embodiment of the bike carrier system, the bike holding device comprises a locking device configured to lock the bike holding device in position. In particular, the locking device may lock the bike holding device in position relative to the bike support platform. Moving the bike support platform may still cause corresponding movement of the bike holding device. For example, the locking device may lock the bike holding device in position by preventing pivoting of the rod element. For example, the rod element can be rotationally locked in position by the locking device, in particular in its storage position and/or use position. The locking device may also lock a length adjustment of the rod element if configured for length adjustment. For example, during use for holding the bike in the transport configuration, a telescopic length adjustment may only be prevented by friction between two elements of the telescopic rod element. The locking device, if engaged, can provide a form fit locking to prevent length adjustment. For example, friction may be sufficient to keep the rod element at its adjusted length when only holding the bike upright in the transport configuration of the bike carrier. The bike may rest with its weight on the bike support platform in the transport configuration. By comparison, in the work stand configuration, the bike may rest with its full weight on the rod element. When holding the bike spaced apart from other parts of the bike carrier system in the work stand configuration, the rod element may collapse under the weight of the bike if the length adjustment is not locked. The locking device may be configured to provide a sufficiently strong lock to prevent the rod element from adjusting its position and/or its length under the weight of a bike and/or when subject to force during maintenance work in the work stand configuration. Such sufficiently strong lock may be provided with a form fit locking or a lever based friction engagement, for example.

The locking device may comprise a support rod attached with a first end to the bike carrier system spaced apart from the rod element and/or the bike fixation arm. An opposite second end of the support rod, in particular comprising an attachment element such as a sleeve element, may be attached to the rod element and/or a part of a bike fixation arm, such as an upright rod, at an adjustable position. For example, the support rod may be attached at the vehicle facing side of the bike support platform. For example, the rod element may be pivotably attached in the middle of the vehicle facing side of the bike support platform and the support rod may be attached pivotably or slideably off-center of the vehicle facing side of the bike support platform. The support rod may be less sturdy, sturdier, or similarly constructed as compared to the rod element. The sleeve element may be configured to sheathe the rod element and/or upright rod. A sleeve element is a simple and easy to retrofit attachment for the support rod element to the rod element. Other attachment means are possible as well, such as a protruding element slideably received in a corresponding groove of the rod element and/or upright rod. The support rod may have a protruding element at its second end as the attachment element for attaching to the rod element. In one embodiment, the support rod may be pivotably attached to the rod element with one end and releasably attachable to the bike holding device, for example to a middle section of the upright rod. Alternatively, the support rod may be pivotably attached to another part of the bike holding device, such as the upright rod, with one end and releasably attachable to the rod element, in particular a middle section. The releasably attachable end of the support rod may comprise a hook. A hook may allow easy attachment and release. Alternatively, he releasably attachable end of the support rod may comprise a strap. A strap may reliably prevent accidental release. The support rod may thus lock pivoting of the rod element, locking the rod element in its use position and optionally also the stow position. The support rod may thus form part of the locking device. The second end of the support rod may be adjustable fixed in place at the rod element and/or the bike fixation arm, in particular by the locking device. Alternatively, the second end of the support rod may be fixed to the rod element and/or upright rod and the first end may be adjustable attached to the bike carrier spaced apart from the rod element. For example, the first end may be configured to slide along the bike support platform during rod element position adjustment. The support rod element may lock pivoting of the rod element and/or bike fixation arm and further support the rod element and/or the bike fixation arm in receiving the load by a bike held in the work stand configuration during maintenance work. The support rod may be configured to increase resilience of the bike carrier system in the work stand configuration without requiring heavy reinforcement of the rod element. The locking device may be integrated into the sleeve element.

The locking device may be configured to be adjustable between a locked state and an open state, in particular with an adjustment device. In the locked state, the locking device may block adjustment of the bike holding device, in particular pivoting of the rod element and/or the bike fixation arm. The locking device may be configured for manual adjustment between the two states, such as by a rotary knob or pivoting lever of an adjustment device. Such a locking device is simple and resilient. The locking device may be biased for one state, in particular the locked state. Such a locking device may prevent unwanted adjustment, in particular of the bike holding device in the work stand configuration. For example, the locking device may comprise a spring forcing a pin into engagement with the rod element and/or the bike fixation arm. The locking device may allow adjustment of the position of the second end along the rod element and/or the bike fixation arm in the locked state in one direction but prevent adjustment into another direction. For example, the locking device may allow adjusting the attachment element, in particular sliding the sleeve element, towards an end of the rod element and/or the bike fixation arm opposite its bike support attachment even in the locked state so that a user may always adjust the rod element and/or the bike fixation arm from the stow position to the use position but prevent sliding towards an end of the rod element and/or the bike fixation arm attached to the bike support platform. It can thus be prevented that a user forgets to adjust the locking device into the locked state, which otherwise could allow the bike holding device to collapse during work stand use, without reducing comfort when adjusting the bike carrier system. Such a functionality can be provided, for example, with a locking device having a ratchet mechanism. For example, a push-button or lever may release the locking device from the locked state in the unlocked state. In the unlocked state, the locking device may permit moving, in particular sliding, the attachment element towards an end of the rod element and/or the bike fixation arm attached to the bike support platform and/or the bike fixation arm so that the rod element may be adjusted into its stow position. According to an embodiment of the bike carrier system, the bike holding device is configured for length adjustment, in particular with the rod element being configured as a telescopic rod element, as described above. Alternatively or additionally, the bike holding device may comprise a length fixation device, such as a clamp or friction fit. The length fixation device may be integrated into the attachment element attaching the second end of the support rod to the rod element. The locking device may be configured to provide the function of the length fixation device.

According to an embodiment of the bike carrier system, the bike holding device comprises an accessory and/or tool holder. For example, the accessory and/or tool holder may be formed by the attachment element attaching the second end of the support rod to the rod element and/or the bike fixation arm. For example, the accessory and/or tool holder may be formed by the sleeve element. Alternatively or additionally, the accessory and/or tool holder may be integrated into the length fixation device. The accessory and/or tool holder may have at least one trough hole for receiving a tool and/or may form a tray. For example, the accessory and/or tool holder may be integrally formed as part of sleeve element, thus requiring only a small number of parts. The accessory and/or tool holder may facilitate work on a bike held by the bike carrier system in the work stand configuration.

The bike holding device may be configured to provide the accessory and/or tool holding functionality in the work stand configuration and/or transport configuration. For example, the accessory and/or tool holder may be configured as having the tray for receiving loose spare parts level in the work stand configuration, in particular with the bike support platform in the tilted position, when the bike carrier system is mounted to the vehicle. For example, the accessory and/or tool holder may be rotatably attached to the attachment element. The accessory and/or tool holder may have a center of gravity relative to its rotational attachment so that the accessory and/or tool holder is kept level even if adjusting the bike carrier system configuration, in particular at least when adjusting the bike support platform between the tilted position and the essentially horizontal position when the bike carrier system is mounted to the vehicle. As such, loss of spare parts and tools may be prevented if the user forgets to collect them before adjusting the bike carrier system configuration. For example, the accessory and/or tool holder may not be accessible with the rod element and/or the bike fixation arm in the stow position and/or may only be usable with the rod element in the use position. The accessory and/or tool holder may also be configured to release any held objects when adjusting the bike carrier system into its transport configuration, for example by having an angle relative to the ground that causes tools and spare parts to fall off. This may prevent said objections to drop from the bike carrier system when driving with the vehicle.

According to an embodiment of the bike carrier system, the bike holding device, in particular the rod element of the bike holding device, is configured for the bike resting on the bike holding device in the transport configuration and/or work stand configuration of the bike carrier system. With such a design, the bike holding device may be simple and have few moving parts. When the bike rests on the bike holding device in its work stand position, a front wheel may touch the ground to offer additional stability when working on the bike. With the bike just resting on the bike holding device in the work stand configuration, the bike can quickly and easily be attached to the bike carrier system in the work stand configuration for stability, for example for washing and doing basic maintenance. With bike just resting on the bike holding device in the transport configuration, none or just a simple adjustment of the bike holding device may be required to adjust the bike carrier system into the work stand configuration.

In some embodiments, the rod element of the bike holding device may not contact the bike in the transport configuration. For example, instead just the bike fixation arm, in particular its curved rod, may contact the bike, in particular a wheel of the bike. Such a configuration allows easy retrofit of the work stand functionality and dedicated design of the curved rod for attaching the bike to the bike carrier system in the transport configuration and of the rod element for attaching the bike to the bike carrier system in the work stand configuration.

When the bike holding device is configured for the bike resting on the bike holding device in the transport configuration of the bike carrier system, the bike holding device may be formed by the bike support platform, a bike support frame, in particular extending essentially orthogonal from the bike support platform, a bike fixation arm, in particular configured as a vertical bike support arm, a hoop arm and/or other protruding part of the bike carrier system. For example, one of the before-mentioned parts may be formed such that the bike may rest thereon with its saddle or top tube in the transport configuration of the bike carrier system without touching and/or resting on other parts of the bike carrier system. For example, such a part may be configured to receive a portion of the saddle and/or top tube of the bike when the bike support platform is in its tilted position. The respective part may tilt together with the bike support platform, thus being adjusted in a position where the bike may rest thereon in order for the bike carrier system to act as a work stand. The bike holding device may thus not require additional and in particular moving parts. Alternatively, the bike holding device may be formed by additional and/or different parts to those listed above, for example the bike holding device including a rod element.

According to an embodiment of the bike carrier system, the bike holding device, in particular the rod element of the bike holding device, has a receiving portion configured for receiving the saddle and/or top tube of the bike resting on the bike holding device in the transport configuration of the bike carrier system. Such a design may offer improved engagement and therefore stability of the bike while performing maintenance. For example, the receiving portion of or even the whole rod element may have a V-shaped longitudinal extension. The bike thus naturally comes to rest at the bottom of the V-shape, providing a predetermined work position without requiring additional fixation. Alternatively or additionally, as an example, the rod element may have a trapezoidal-like cross-section, which may form the receiving portion. The trapezoidal-like cross-section may provide a natural position for the bike, for example tilted slightly forward. For example, the smaller of the two parallel sides of the trapezoidal cross-section is facing upwards and/or towards the bike in the work stand configuration, providing a resting surface. Said surface may be arranged below a front section of a saddle resting on the rod element. A slanted side of the trapezoidal cross-section may contact another part of the bike, such as a seat post, providing another resting surface. The rod element may be pivotable deployable and/or integrated to the bike carrier system or attachable to other parts of the system.

According to an embodiment of the bike carrier system, the bike holding device comprises a bike fixation device for releasably engaging a frame, a wheel and/or seat post of the at least one bike. The bike fixation device may be configured to releasably fix the bike to the bike carrier system. For example, the bike fixation device may be configured to fix the bike to the bike carrier system in the work stand configuration and/or the transport configuration. For example, the bike fixation device may be arranged at one end section of the rod element. The bike fixation device may be configured as a clamping device and/or as a strap. A clamping device may be configured to allow fixation of differently shaped and/or sized frames, wheels and/or seat posts. Alternatively or additionally, the bike fixation device may extend transversal, such as orthogonal, to a longitudinal extension of the rod element. The bike fixation device may comprise a curved rod which is adjustable in position, for example to push down on a wheel of the bike. The curved rod may be part of the bike fixation arm and/or may be slideable attached to an essentially upright rod of the bike fixation arm.

According to an embodiment of the bike carrier system, the bike fixation device comprises a jaw, in particular a pivoting jaw with a triangular engagement shape, and/or a strap for engaging the at least one bike. A jaw, in particular with a triangular engagement shape, may prevent unwanted rotation of the engaged bike frame. Such a design is particular useful with a non-round cross section of the frame section engaged by the jaw, as can be found in many bikes with carbon frames. A strap is a very lightweight and simple element for engaging the bike.

According to an embodiment of the bike carrier system, the bike holding device is configured to allow rotational adjustment of the bike fixation device relative to the rest of the bike carrier system, in particular to the rod element. This may allow adjustment of the bike holding device to the specific geometry of the bike. Further, this may allow adjustment of the bike work position held in the work stand configuration. For example, the bike may be turned upside down while being held by its seat post to facilitate maintenance on a bottom side of the bike. The rotational adjustment may be released by an actuation element, such as a lever or button. Said lever or button may also be used to lock the bike holding device into place. The bike fixation device may be configured for rotation about a longitudinal extension of the bike fixation device, for example transversal to an extension of the rod element. The bike fixation device may be configured for rotation in a step-wise manner defined by engaging teeth. Such a design may offer great stability.

According to an embodiment of the bike carrier system, the bike fixation device is configured to contact the at least one bike with a soft and/or an elastic material, such as a rubber or foam. Such a design may protect the bike, in particular from scratches.

According to an embodiment of the bike carrier system, the bike fixation device comprises a honeycomb-like surface texture, in particular corresponding to a cross section of the rod element, on the sides contacting the at least one bike and/or a surface area intended for actuation of the fixation device. Such a design may protect the bike engaged thereto and result in a lightweight bike carrier system.

According to an embodiment of the bike carrier system, the bike holding device comprises a carrier fixation device configured for attaching the bike holding device to the rest of the bike carrier system, in particular for releasably attaching the bike holding device to the rest of the bike carrier system. The bike carrier fixation device may be configured to allow attachment of the bike holding device to several different spaced apart positions and/or to move the bike holding device relative to the rest of the bike carrier system when attached to a particular position. For example, an angle of the rod element of the bike holding device relative to the bike support platform may thus be adjusted by a user, for example by rotation. Similarly, the bike holding device position may be slidably adjusted, for example along a frame, bike fixation arm, bike support platform and/or rod element of the bike carrier system. The bike carrier system can thus be adjusted to different user needs, different bike geometries and/or between its transport and work stand configuration.

Another aspect relates to a carrier fixation device configured for attaching a bike holding device to a bike carrier system, in particular configured for attaching the bike holding device of the bike carrier system according to the first aspect to the rest of the bike carrier system. For example, the bike holding device may be configured as a system with several different carrier fixation devices and/or for exchange of the carrier fixation device. The bike holding device may thus be adapted to different bike carrier systems for rear mounting to a motor vehicle without a work stand capability to provide such a capability to such bike carrier systems. The carrier fixation device may be configured to selectively allow moving of the bike holding device, for example pivoting of the rod element. The carrier fixation device may be configured to rotationally lock the bike holding device in position, in particular in its transport position and/or work stand position. For this purpose, the carrier fixation device may comprise a locking element. Alternatively to a releasable attachment, the bike holding device may also be permanently attached.

According to an embodiment of the bike carrier system, the carrier fixation device is arranged at an end section of the rod element opposite the end section with the bike fixation device. This allows a long reach of the bike holding device, for example allowing to hold the bike in the work stand configuration spaced apart from the bike support platform. Alternatively or additionally, a position of the carrier fixation device and or bike fixation device is adjustable along the longitudinal extension of the rod element. This allows to adjust the reach of the bike holding device. Adaptation of the bike holding device in the transport configuration to differently sized bike frames and/or adjustment of the vertical position of the bike held in the work stand configuration is possible. The bike holding device may be configured for an adjustment of the carrier fixation device position and/or bike fixation device position along the longitudinal extension of the rod element and/or bike fixation arm in a step-wise manner. Adjustment of each fixation device may only be possible if released by a corresponding lever and/or may be blocked by this lever. The rod element may have a scale on its surface indicating a position of the carrier fixation device and/or bike fixation device. Said scale may enable a user to quickly adjust the carrier fixation device and/or bike fixation device to a desired and/or previous position. Alternatively or additionally, a rotation of the carrier fixation device and/or bike fixation device around the longitudinal extension of the rod element is blocked, in particular due to a cross section of a through hole in the respective fixation device corresponding to a non-round shaped cross section of the rod element, such as a triangular or trapezoidal shaped cross section. Alternatively, the carrier fixation device is arranged on the bike fixation device without a rod element connecting the two fixation devices. Such a design is compact and simple.

According to an embodiment of the bike carrier system, the bike carrier system comprises a bike support frame, in particular extending essentially orthogonal from the bike support platform, a vertical bike support arm, a hoop arm, the bike fixation arm and/or other protruding part. The carrier fixation device may be configured for attachment to the bike support frame of the bike carrier system, the vertical bike support arm of the bike carrier system, the hoop arm of the bike carrier system, the bike fixation arm of the bike carrier system and/or the other protruding part of the bike carrier system. In particular, the bike holding device may thus be attached to the same part of a bike carrier system as arms that are used to hold attached bikes upright in the transport configuration. The bike holding device may replace one or several of such arms. The carrier fixation device may be configured for clamping attachment to the rest of the bike carrier system, in particular a screwed clamping attachment.

According to an embodiment of the bike carrier system, the bike holding device is the only part of the bike carrier system holding the at least one bike in the work stand configuration, in particular with the wheels of the at least one bike spaced apart from the bike support platform and/or the ground and/or the at least one bike hanging from the bike holding device. Alternatively or additionally, the bike holding device may be configured to hold the at least one bike in its position in the transport configuration together with other parts of the bike carrier system, in particular essentially upright with the wheels of the at least one bike resting on the bike support platform.

According to an embodiment of the bike carrier system, the rod element is pivotably and/or extendable attachable to the rest of the bike carrier system, in particular with one end to the bike support platform, on top of a wheel tray, a load wing, or to the bike fixation arm. Alternatively or additionally, the rod element may be configured to at least partially lift the at least one bike away from the bike support platform in the work stand configuration, in particular with its rear wheel and/or by engaging the bike frame from below in the work stand configuration, in particular a pedal hub of the at least one bike. For example, the rod element may be pivoted upward and/or extended to lift the bike at least partially away from the bike support platform. Such a design lifting the bike from below in the transport configuration may not require a clamping of the bike in the work stand configuration. This design may be lighter and require fewer moveable parts. Further, when not used as a work stand, the rod element may not inhibit loading and unloading of a bike to the bike carrier system in the transport configuration. By comparison, the design where the bike holding device holds clamps to the frame and/or seat post, the bike may be more accessible for maintenance. The pedal hub may provide a large and sturdy section for engaging the bike with the rod element. For example, in the transport configuration, the at least one bike is partially resting on the rod element.

According to an embodiment of the bike carrier system, the bike holding device comprises a pedestal device, wherein the pedestal device is configured to support the bike holding device on the ground as a bike work stand independent of the rest of the bike carrier system. A user may thus use the bike holding device as a bike work stand away from the vehicle. For example, the user may therefore even perform maintenance on his bike even if the parking location of his vehicle does not provide enough space at the rear of the vehicle.

For example, the pedestal may be arranged at an end section of the rod element opposite the bike fixation device. A high work position for the bike may thus be achieved. Alternatively or additionally, the pedestal may be releasably attachable to the rod element. If the pedestal is not needed, it can thus be left at home. Further, the pedestal can thus be carried in the interior of the vehicle.

Alternatively or additionally, the pedestal may be configured to be adjustable between a collapsed position and a deployed position. In the collapsed position, the pedestal may be configured to take up less space than in the deployed position and/or to not obstruct attachment of bikes to the bike carrier system in the transport configuration with the attached bike holding device and/or mounting of the bike carrier system to the vehicle with the attached bike holding device.

According to an embodiment of the bike carrier system, the pedestal device is configured as a tripod. A tripod is a simple and lightweight pedestal that may securely stand even on uneven ground. For example, respective legs of the tripod may be configured for pivoting from a folded position to an unfolded position when a release element of the pedestal device is actuated. For example, unfolding and/or folding can be possible when pressing a button. The rod element of the bike holding device may be configured to form one of the legs of the tripod. The rod element may be configured to not be folded and unfolded. Respective foldable legs of the tripod may be connected to the rod element with one end and a linkage limiting a maximum unfolded angle.

According to an embodiment of the bike carrier system, the bike carrier system is configured to be adjusted into the work stand configuration by attachment of the bike holding device. Alternatively or additionally, the bike carrier system may be configured to be adjusted into the work stand configuration by adjusting the bike holding device, in particular the rod element, in a work stand position. Alternatively or additionally, the bike carrier system may be configured to be adjusted into the work stand configuration by adjusting the bike support platform into the tilted position. The bike carrier system can thus easily be adjusted between its configurations.

According to an embodiment of the bike carrier system, the bike carrier system may comprise a locking system. The locking system may be configured to lock the bike carrier system in the work stand configuration and/or transport configuration. Additionally or alternatively, the locking system may be configured to lock the bike carrier system to the vehicle and/or the bike holding device to the rest of the bike carrier system. Additionally or alternatively, the locking system may be configured to lock any attached bike to the bike carrier system, for example by locking the bike fixation device in a position engaged to the bike. Additionally or alternatively, the locking system may be configured to lock the bike support platform in position. For example, the locking system may comprise at least one locking cylinder and a key. With the locking system, security of valuables may be increased for the user.

A second aspect relates to a bike holding device for a bike carrier rear mountable to a motor vehicle. The bike holding device is configured for releasable attachment to a bike carrier, in particular as part of the bike carrier system according to the first aspect. The bike holding device may correspond to the bike holding device described as part of the first aspect. The bike holding device may be configured to hold at least one bike in a position for performing maintenance on the at least one bike when the bike holding device is attached to the bike carrier and the bike carrier is mounted to the vehicle. The bike holding device may therefore enable a bike carrier to also provide a bike work stand functionality. The bike holding device may be configured to retrofit and thus upgrade an existing bike carrier rear mountable to a motor vehicle. Additionally or alternatively, the bike holding device may be configured to hold at least one bike in a position for performing maintenance on the at least one bike when the bike holding device is standing on the ground. In this case, a work stand functionality may therefore be provided independently of the motor vehicle.

According to an embodiment of the bike holding device, the bike holding device may be configured for use as a bike stand on the ground when not attached to the bike carrier system. For example, the bike holding device is always configured for use as a bike stand on the ground when not attached to the bike carrier system or can be configured use as a bike stand on the ground when not attached to the bike carrier system with the attachment of the pedestal thereto. The pedestal may be configured to require deployment, for example by unfolding legs, prior to placing the bike holding device on the ground.

According to an embodiment of the bike holding device, the bike holding device is configured for replacing an arm of the bike carrier configured for holding the at least one bike upright during transport with the vehicle. The number of additional parts on a bike carrier having the capability to provide a work stand functionality may thus be reduced. For example, when using the bike holding device with a bike carrier, a previously used arm for holding the bike upright during transport may be discarded.

The bike holding device may comprise additional parts as compared to a conventional bike holding device without any work stand functionality. For example, the bike holding device may comprise an additional rod element attached to a bike fixation arm or replacing a rod element not being capable of a bike holding device without the work stand functionality. As another example, the bike holding device may comprise reinforcement parts, such as the support rod.

A third aspect relates to a bike stand retrofit kit for a bike carrier rear mountable to a motor vehicle, in particular wherein the bike carrier comprises a bike support platform and a bike holding device. The retrofit kit is configured to provide to the bike carrier an adjustment function between a transport configuration for transporting at least one bike attached to the bike carrier and a work stand configuration for performing maintenance on at least one bike attached to the bike carrier when the bike carrier is mounted to the vehicle and the retrofit kit is mounted to the bike carrier. The retrofit kit allows a user to upgrade an existing bike carrier system with the work stand functionality. The retrofit kit and the bike carrier may form a bike carrier system according to the first aspect. For example, the bike stand retrofit kit may comprise additional parts for a bike holding device of the existing bike carrier, such as the locking device and/or the support rod and/or attachment element.

According to an embodiment of the bike stand retrofit kit, the retrofit kit comprises a locking device, in particular forming part of the bike holding device when the retrofit kit is mounted to the bike carrier, configured to lock the bike holding device in position relative to the bike support platform. For example, the locking device may be configured to prevent pivoting of the bike holding device relative to the bike support platform in its locked state. The locking device may be configured to prevent length adjustment of the bike holding device in its locked state. The locking device may be configured to prevent movement of attachment element of the retrofit kit along a rod element of the bike holding device.

The retrofit kit may comprise a rod element, in particular a telescopic length adjustable rod element, configured to replace a rod element of the bike holding device. The telescopic length adjustable rod element replacing a rod element may, for example, allow the bike to be held spaced apart further from the rest of the bike carrier than with the pre-existing rod element in the work stand configuration when adjusted to a long length. For example, when adjusted to a shorter length, the replacement telescopic length adjustable rod element may hold a bike upright on the bike support platform in the transport configuration of the bike carrier. Alternatively or additionally, the rod element of the retrofit kit may be configured to attach to a preexisting rod element of the bike holding device, for example to form the telescopic length adjustable rod element. Alternatively or additionally, the rod element may be configured for attachment to a pre-existing part of the bike holding device, such as a bike fixation arm. For example, the rod element may be configured for an adjustable attachment. In particular, the rod element may be pivotably attached to the bike fixation arm so that the rod element can be adjusted between its use position and its stow position.

According to an embodiment of the bike stand retrofit kit, the locking device comprises a support rod attachable with a first end to the bike carrier system spaced apart from the rod element and/or the bike fixation arm and with an opposite second end attachable to the rod element and/or the bike fixation arm, in particular with an attachment element attachable to a rod element and/or the bike fixation arm of the bike holding device. The attachment element may be formed, for example, as a sleeve element. The attachment of the second end of the support rod to the rod element and/or the bike fixation arm of the bike holding device may be adjustable, in particular self-adjustable when adjusting the rod element and/or the bike fixation arm of the bike holding device between its stow position and use position. Alternatively or additionally, the attachment of the first end of the support rod to the bike carrier system may be adjustable, in particular self-adjustable when adjusting the rod element and/or the bike fixation arm of the bike holding device between its stow position and use position.

According to an embodiment of the bike stand retrofit kit, the locking device comprises an adjustment device, in particular comprising a lever, clamp and/or quick release button, configured to adjust the locking device between a locked state and a release state. In the locked state, the locking device may lock the bike holding device in position relative to the bike support platform, as previously described. The adjustment device may also bias the locking device towards one state, such as the locked state. The adjustment device may comprise a ratchet mechanism, allowing adjustment of an adjustable attachment of the support rod element in one direction but blocking the adjustment in another direction. According to an embodiment of the bike stand retrofit kit, the retrofit kit is configured for replacing an arm of the bike carrier configured for holding the at least one bike essentially upright during transport with the vehicle. For example, the retrofit kit may comprise a telescopic rod element or rigid rod element, in particular configured to replace the arm of the bike carrier, the support rod, and the attachment element in the form of the sleeve element. Alternatively or additionally, the retrofit kit may be configured for attachment to an arm of the bike carrier configured for holding the at least one bike essentially upright during transport with the vehicle, such as a bike fixation arm.

According to an embodiment of the bike stand retrofit kit, the retrofit kit is configured for providing an accessory and/or tool holder to the bike carrier when mounted to the bike carrier. For example, the retrofit kit may form a tray at the rod element holding the bike in the work stand configuration, in particular at a bike holding end of the rod element holding the bike in the work stand configuration. The accessory and/or tool holder may be provided by the attachment element of the retrofit kit, for example integrally formed in a plastic part of the sleeve element, such as an injection molded part. The accessory and/or tool holder may also be configured as an additionally part, for example configured for attachment to the sleeve element and/or rod element. The accessory and/or tool holder may be provided at least in the transport configuration of the bike carrier when the retrofit kit is mounted to the bike carrier. In other configurations, such as in the transport configuration and/or when the rod element is in the stow position, the accessory and/or tool holder may not be usable but still be present on the bike holding device.

A fourth aspect relates to a bike carrier rear mountable to a motor vehicle, the bike carrier in particular comprising a bike support platform and a bike holding device. The bike carrier according to the fourth aspect is configured for receiving a bike stand retrofit kit according to the third aspect. For example, the bike carrier may be configured for attachment of the sleeve element and/or support rod and/or the rod element. For example, the bike support platform may comprise a section configured for attachment of the support rod, such as a through hole or slot for attachment of the first end of the support rod. For example, a bike fixation arm may comprise a section configured for attachment of the rod element, such as a through hole or slot for attachment of the rod element.

A fifth aspect relates to a use of a bike carrier system for rear mounting to a motor vehicle and/or a bike holding device for a bike carrier rear mountable to a motor vehicle to transport at least one bike attached to the bike carrier system with the motor vehicle and as a work stand for performing maintenance on at least one bike attached to the bike carrier system. For example, the fifth aspect relates to the use of the bike carrier system according to the first aspect and/or of the bike holding device according to the second aspect and/or of the bike carrier according to the fourth aspect with the retrofit kit according to the third aspect. The use may comprise a step of mounting the retrofit kit to the bike carrier. The use may comprise a step of adjusting the bike carrier system and/or bike holding device between a transport configuration and a work stand configuration. In particular, a part of the bike carrier system and/or bike holding device may be adjusted into such a position that the bike may hang therefrom without touching the ground. In particular, a part of the bike carrier system may be adjusted such that the bike may rest thereon with its saddle and/or top tube to not touch the ground and/or touch and/or rest on other parts of the bike carrier system with other parts of the bike, such as the wheels touching a bike support platform of the bike carrier system.

Preferred embodiments and expedient developments of one aspect may also constitute preferred embodiments and expedient developments of other aspects. Other features of the present invention will be apparent from consideration of the information contained above as well as in or in combination with the following detailed description, drawings and claims. The present invention is illustrated by way of example, and not by way of limitation, in the figures of the accompanying drawings.

### BRIEF DESCRIPTION OF FIGURES

- Fig. 1: shows, in a schematic side view, a first embodiment of a bike carrier system mounted to the rear of a motor vehicle in a transport configuration.
- Fig. 2: shows, in a schematic side view, the bike carrier system according to Fig. 1 with a bike support platform in a tilted position.
- Fig. 3: shows, in a schematic side view, the bike carrier system according to Fig. 1 in a work stand configuration.
- Fig. 4: shows, in a schematic perspective view, details of a first embodiment of a bike holding device of the bike carrier system according to Fig. 1.
- Fig. 5: shows, in another schematic perspective view, details of the bike holding device of Fig. 4.
- Fig. 6: shows, in a schematic perspective view, the bike holding device of Fig. 4 detached from the rest of the bike carrier system and in a work stand configuration.
- Fig. 7: shows, in a schematic back view, a second embodiment of a bike carrier system mounted to the rear of a motor vehicle in a transport configuration.
- Fig. 8: shows, in a schematic perspective back view, the bike carrier system of Fig. 7 in a work stand configuration.
- Fig. 9: shows, in a schematic side view, details of a second embodiment of a bike holding device of the bike carrier system according to Fig. 1.
- Fig. 10: shows, in a schematic perspective view, details of the bike holding device of Fig. 9, now including a pedestal.
- Fig. 11: shows, in a schematic perspective view, details of the bike holding device of Fig. 8 in a work stand configuration.
- Fig. 12: shows, in a schematic side view, a third embodiment of a bike carrier system mounted to the rear of a motor vehicle in a work stand configuration.
- Fig. 13: shows, in a schematic perspective view, a fourth embodiment of a bike carrier system in a work stand configuration.
- Fig. 14: shows, in a schematic side view, the bike carrier system of Fig. 13.
- Fig. 15: shows, in a schematic perspective view, the bike carrier system of Fig. 13 mounted to the rear of a motor vehicle in the work stand configuration.
- Fig. 16: shows, in a schematic side view, a bike stand retrofit kit which is also part of the bike carrier system of Fig. 13.
- Fig. 17: shows, in a schematic perspective view, the bike stand retrofit kit of Fig. 13.
- Fig. 18: shows, in a schematic perspective view, a fifth embodiment of a bike carrier system in a work stand configuration.
- Fig. 19: shows, in a schematic perspective view, the bike carrier system of Fig. 18 at least partially adjusted into a transport configuration.
- Fig. 20: shows, in a schematic perspective view, a slightly different design of the bike carrier system of Fig. 18 in the work stand configuration.

### DETAILED DESCRIPTION OF EMBODIMENTS

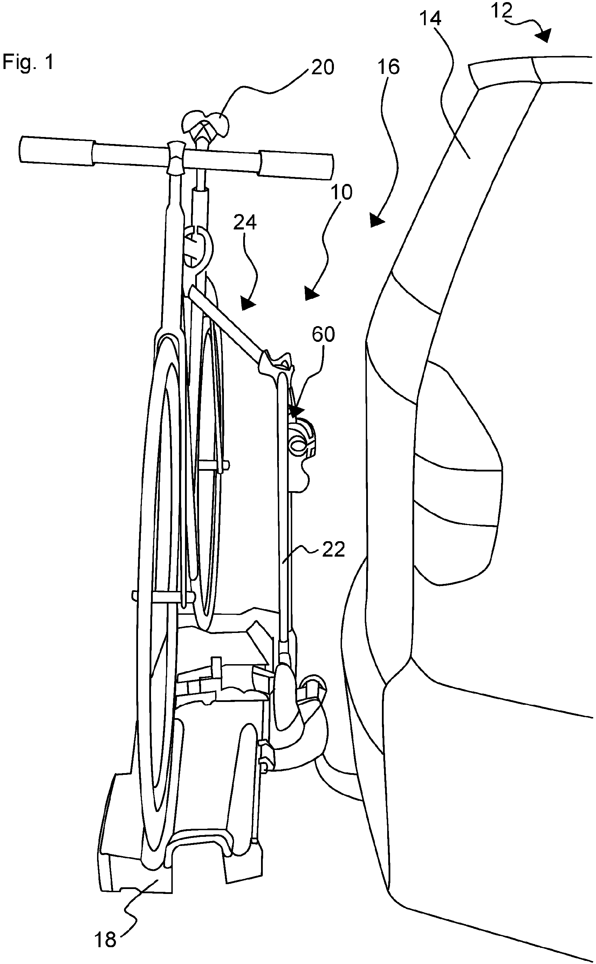

Fig. 1 shows a first embodiment of a bike carrier system 10 mounted to the rear of a motor vehicle 12 in a transport configuration. Here, the bike carrier system 10 is mounted to a tow ball, although the bike carrier system 10 may be configured to be mounted to a fix point, hitch coupling or rear lid 14 of the vehicle 12. The bike carrier system 10 comprises a bike carrier 16. The bike carrier 16 comprises means for mounting to the motor vehicle 12 and a bike support platform 18. The bike support platform 18 may be arranged essentially horizontally when the bike carrier 16 is mounted to the vehicle 12, as shown in Fig. 1. The bike support platform 18 comprises backlights that may be connected to the vehicle 12. On a top side of the bike support platform 18, the bike support platform 18 comprises grooves for receiving wheels of bikes to be transported. Here, a single bike 20 is resting with its wheels on the bike support platform 18 in the grooves and is thus supported by the bike support platform 18 during transport. The shown bike carrier 16 is configured to also transport two bikes simultaneously. In other embodiments, only a single bike or three or more bikes may be transported.

As can be seen in Fig. 1, the bike carrier 16 is configured to transport the bike 20 upright. To keep the bike 20 into place, its wheels are fixed with straps in place on the bike support platform 18. Further, the bike carrier 16 comprises a frame 22, which extends essentially vertical from the bike support platform 18 at a vehicle 12 facing side of the bike support platform 18. Said frame 22 prevents the bike from falling onto the rear of the vehicle 12. The frame 22 is formed by a tube that has an upside-down U-shape. However, other suitable means and forms are possible, such as a single straight upright post.

The bike carrier system 10 further comprises a bike holding device 24 and a bike holding arm 60. The bike holding device 24 is attached to the frame 22 with one end and at another section to the bike 20. The bike holding device 24 therefore holds the bike 20 upright during transport, thus further securing the bike 20. Further details of the bike holding device 24 will be explained below. The bike holding arm 60 may be attached with its free end section to a second bike transported with the bike carrier system 10. Since Fig. 1 only shows one bike 20 that is transported, the bike holding arm 60 is currently not in use for holding a bike upright. Similar to the bike holding device 24, one end of the bike holding arm 60 is attached to the frame 22.

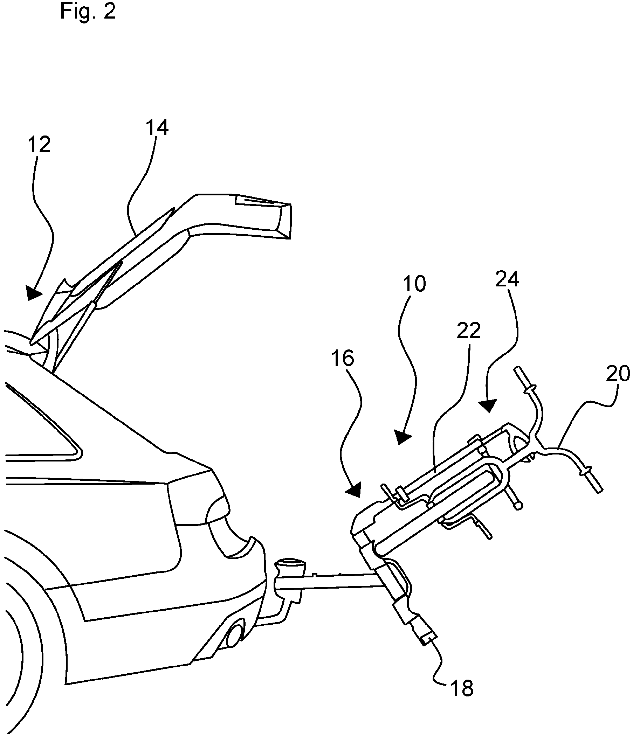

Fig. 1 shows the rear lid 14 of the vehicle 12 in a closed position. Fig. 2 shows the rear lid 14 in an open position, thus allowing access to the interior of the vehicle 12 and in particular a luggage space. To open the rear lid 14, the rear lid 14 is pivoted around an upper hinge. However, such a movement may be blocked by the bike carrier system 10 as arranged in Fig. 1. For example, the frame 22 and/or the transported bike 20 may be in the way of the rear lid 14 when being pivoted around its upper hinge. To avoid a collision, the bike support platform 18 can be pivoted from its essentially horizontal position shown in Fig. 1 and away from a rear end of the vehicle 12 to a tilted position shown in Fig. 2. As can be seen in Fig. 2, the bike holding device 24 still holds the bike 20 on the bike support platform 18 in a position upright with regard to a top side of the bike support platform 18. The bike holding device 24 prevents the bike 20 from moving. Pivoting of the bike support platform 18 may be released, for example, with a lever.

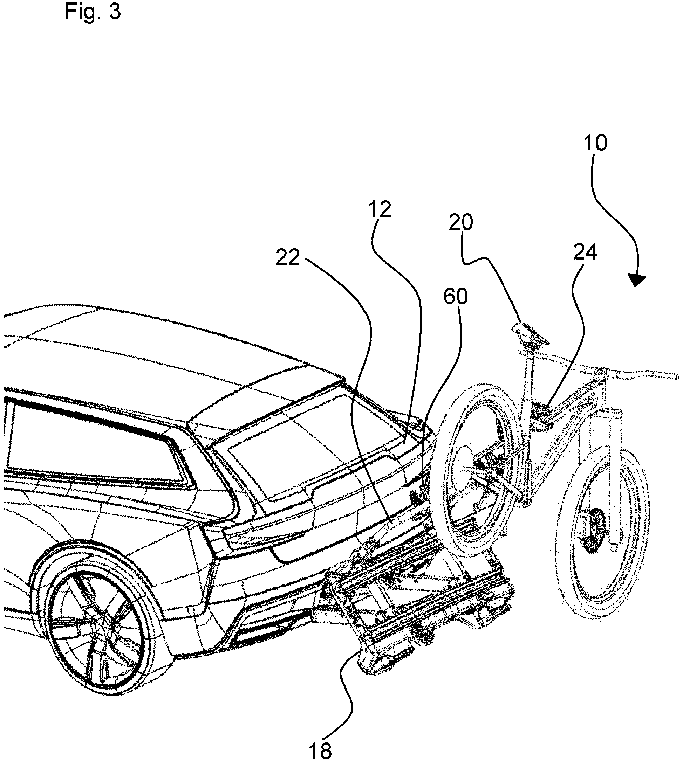

Fig. 3 shows the bike carrier system 10 adjusted into its work stand configuration. As can be seen in Fig. 3, in this configuration the bike 20 is held above the ground only by the bike holding device 24 clamped to an upper tube of the frame of the bike 20. The wheels may thus turn freely and the underside of the bike 20 is also easily accessible. In particular, the wheels of the bike 20 are spaced apart from the platform in a horizontal direction. In some embodiments and/or in some positions of the bike holding device 24, a single wheel of the bike 20 may rest on the ground. Maintenance work can easily be performed on the bike 20 when attached to the bike carrier system 10 in the work stand configuration, as shown in Fig. 3. The bike holding device 24 is configured to hold the bike 20 in the air without further support, being rigid enough and clamping to the frame of the bike 20 with sufficient force to prevent unwanted movement of the bike 20 relative to the rest of the bike carrier system 10 during maintenance work on the bike 20. The bike carrier system 10 in the work stand configuration thus allows even complex maintenance work to be carried out on the bike 20.

To adjust the bike carrier system 10 into the work stand configuration, the position of the bike holding device 24 relative to the frame 22 has been adjusted, for example to raise the bike 20 higher relative to the frame 22. In some embodiments, however, the bike holding device 24 can remain in the same position as in the transport configuration. Additionally, the bike support platform 18 has been adjusted into its tilted position to provide sufficient free space under the bike 20 and avoid contact between the bike support platform 18 and the bike 20. In some embodiments, however, the bike support platform can remain in the essentially horizontal position in the work stand configuration. To adjust the bike carrier system 10 between its configurations, the bike 20 and optionally other bikes attached thereto are detached and/or unloaded from the bike carrier system 10. For this purpose, any straps holding the wheels of the bike 20 into place may be released. In some embodiments, however, at least one or all bikes attached to the bike carrier system 10 can remain attached during adjustment of the bike carrier system configuration.

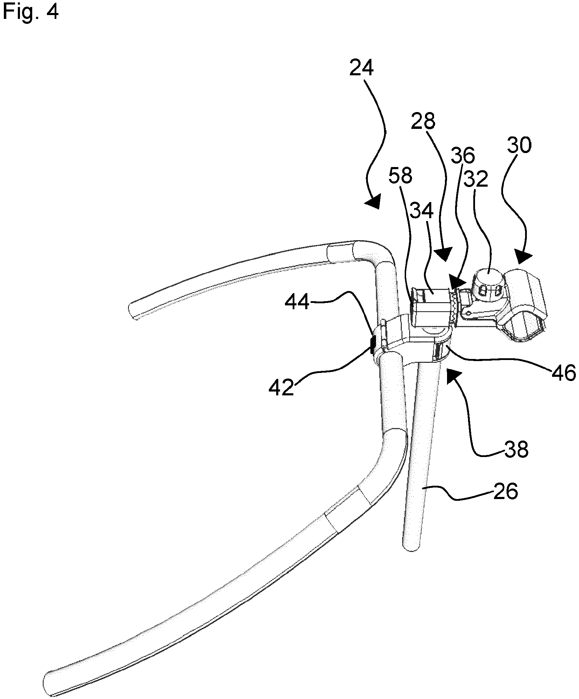

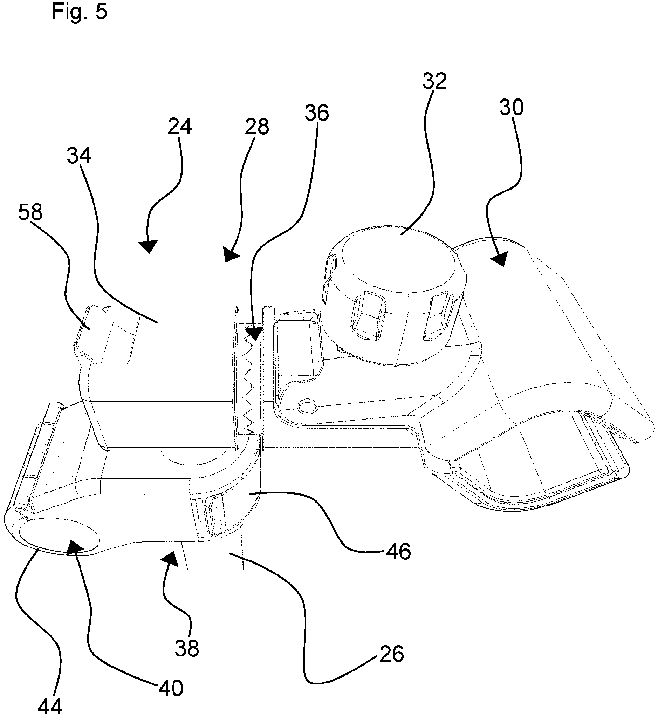

Figs. 4 and 5 show further details of the bike holding device 24 according to a first embodiment. The bike holding device 24 comprises a rod element 26, which is formed by a single piece such as a tube or bar. At an upper end section, a bike fixation device 28 is attached to the rod element 26 at a fixed position. In the presently shown embodiment, the rod element 26 is formed by a tube with a round cross-section. The bike fixation device 28 comprises a clamping device 30 that essentially extends orthogonally to a longitudinal extension of the rod element 26. The clamping device 30 is configured to releasably engage a frame or seat post of a bike. Sides of the clamping device 30 configured for contacting the bike 20 are covered with a soft and/or elastic material, such as rubber, for protection of the bike 20. For this purpose, an actuation element may tighten and/or untighten the clamping device 30. In the present embodiment, the actuation element is configured as a rotatable knob 32. Furthermore, the clamping device 30 may be rotated about its longitudinal axis relative to the rod element 26. For this purpose, another actuation element may release a blocking engagement between the clamping device 30 and an element 34 of the bike fixation device 28 fixed to the rod element 26. Here, the blocking engagement is provided by corresponding teeth 36 and the actuation element is configured as a lever 58. By releasing the lever 58, the teeth 36 disengage and the clamping device 30 is free to rotate. This allows a user to adjust a work position of the bike 20 held by the bike holding device 24 in the work stand configuration. For example, the bike may thus be turned upside down while being held by the bike carrier system 10. Further, rotation of the clamp also allows adjustment of the bike holding device 24 to a geometry of the frame of the bike 20 in the transport configuration of the bike carrier system 10, allowing to more securely and/or easily fix the bike 20 into place in the transport configuration.

Furthermore, the bike holding device 24 comprises a carrier fixation device 38. The carrier fixation device 38 is configured to releasably attach the bike holding device 24 to the rest of the bike carrier system 10, respectively the biker carrier 16. In the shown embodiment, the carrier fixation device 38 is configured to attach the bike holding device 24 to the frame 22. For this purpose, the carrier fixation device 38 has walls forming a through hole 40 which can be opened at the side to place the frame 22 therein. Further, the bike carrier fixation device 38 is configured for quick attachment and detachment as well as fixing the bike holding device 24 in place. For this purpose, a lever 42 may tighten or release a hinged part 44 of the wall forming the through hole 40. By tightening the lever 42, a diameter of the through hole 40 may be reduced. In other embodiments, the carrier fixation device 38 may be configured to alternatively or additionally attach the bike holding device 24 to other parts, such as an upright post or the bike support platform 18.

The carrier fixation device 38 is configured to Be shifted along the extension of the rod element 26, thus changing its position relative to the bike fixation device 28. As can be seen in Fig. 4, the carrier fixation device 38 is positioned rather close to the bike fixation device 28. The carrier fixation device 38 can be moved along the longitudinal extension of the rod element 26 to adjust a reach of the bike holding device 24 for holding the bike 20. For that purpose, the carrier fixation device 38 comprises another lever 36 that locks the carrier fixation device 38 into place on the rod element 26. When released, the lever 36 allows the carrier fixation device 38 to be moved along the rod element 26. This also allows a user to adjust a work position of the bike 20 held by the bike holding device 24 in the work stand configuration. For example, the bike may thus be held further away from the ground in the work stand configuration. Further, reach adjustment also allows adjustment of the bike holding device 24 to a geometry of the frame of the bike 20 in the transport configuration of the bike carrier system 10, allowing to more securely and/or easily fix the bike 20 into place in the transport configuration.

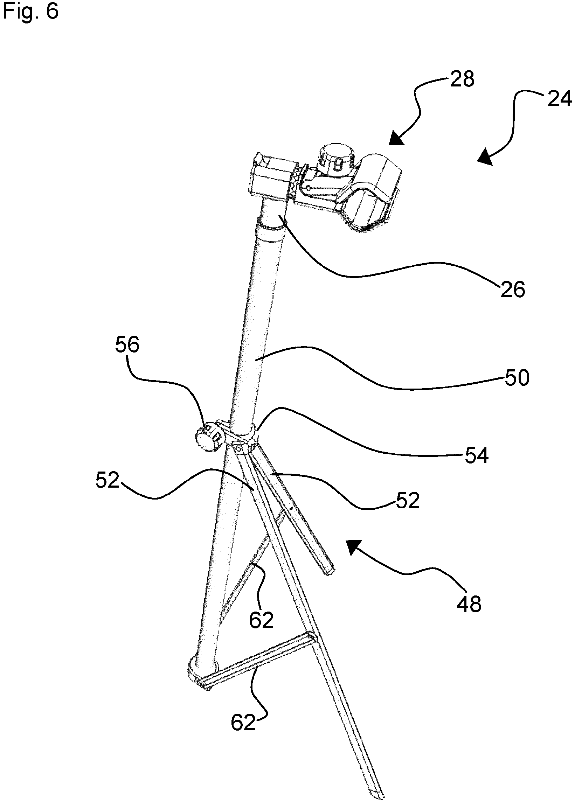

Fig. 6 shows the bike holding device 24 in a work stand configuration independently of the bike carrier 16. For that purpose, the carrier fixation device 38 has been removed and a pedestal device 48 has been removably attached to the rod element 26. In some embodiments the carrier fixation device 38 may remain attached to the rod element 26 when the pedestal device 48 is attached to the rod element 26. The pedestal device 48 is configured to support the bike holding device 24 on the ground as a bike work stand independent of the rest of the bike carrier system 10 and the bike carrier 16.

In the shown embodiment, the pedestal device 48 is configured as a tripod, which allows a secure stand on uneven ground often encountered outdoors and at parking lots. The pedestal device 48 comprises a rod element 50 that attaches to the rod element 26. The rod element 50 is also formed by a single piece such as a tube or bar. Similar to the carrier fixation device 38, a position of the pedestal device 48 along the extension of the rod element 26 may be adjusted to adjust a height of the bike holding device 24 in its work stand configuration shown in Fig. 6. The rod element 50 also acts as one of the legs of the tripod. Two other legs 52 are pivotably attached with one end to a slider element 54 attached to the rod element 50. The slider element 54 may be moved along a longitudinal extension of the rod element 50 to fold and unfold the tripod. Fig. 6 shows the tripod unfolded with the legs 52 extending away from the rod element 50 and the pedestal device 48 in a deployed configuration allowing use of the bike holding device 24 as a work stand. A maximum angle and thus unfolding of the legs 52 is limited by a respective single link 62 each pivotably attached with one end to a bottom end of the rod element 50 and with an opposite end to a middle section of the respective leg 52. The links 62 also increase stability of the tripod. Sliding the slider 54 upwards along the rod element 50 folds the legs 52 towards the rod element 50 and thus collapses the tripod. The legs 52 are arranged essentially parallel to the rod element 50 in the folded position, allowing ease of carry and space saving during storage. A position of the slider 54 may be locked in place on the rod element 50, for example with the shown knob 56.

The legs 52 basically extend transversely to the rod element 50 in the same direction as the clamping device 30 extends from the rod element 26. The legs 52 may therefore support the weight of the bike 20 attached to the clamping device 30 while requiring only a small ground space. This arrangement can safely prevent toppling over of the bike holding device 24 during bike maintenance when using the bike holding device 24 as a work stand independently of the bike carrier 16. The bike 20 can be attached to the bike holding device 24 in work stand configuration without being mounted to the bike carrier 16 in a similar way as described before. For example, the bike fixation device 28 may engage the frame or seat post of the bike 20 in a similar way as shown in Fig. 3.

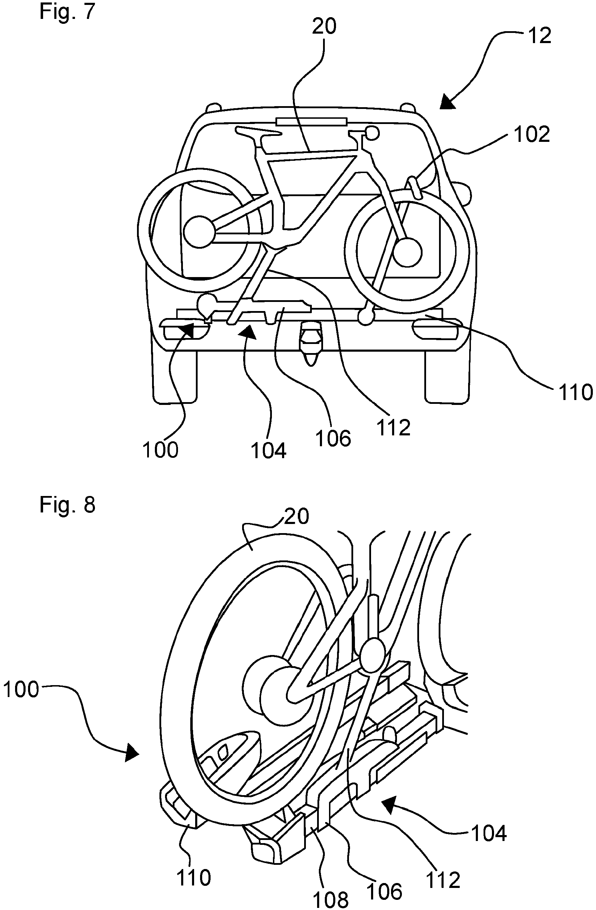

Figs. 7 and 8 show a second embodiment of a bike carrier system 100. Overall structure is similar to the bike carrier system 10: The bike carrier system 100 is also configured for rear mounting to a motor vehicle 12. The bike carrier system 100 is also configured for adjustment, when mounted to the vehicle 12, between a transport configuration, shown in Fig. 7, for transporting at least one bike 20 attached to the bike carrier system 100 and a work stand configuration, shown in Fig. 8, for performing maintenance on at least one bike 20 attached to the bike carrier system 100. The bike carrier system 100 also comprises a bike support platform 110. Wheels of the bike 20 may also be fixed to the bike support platform 110 with straps.

However, the bike carrier system 100 has no frame 22 with a bike holding arm and a bike holding device attached thereto to keep an attached bike upright in the transport configuration of the bike carrier system 100. Instead, the bike carrier system 100 comprises a bar element 102 that may partially grasp around a wheel of the bike 20. As can be seen in Fig. 7, the bar element 102 grasps onto a front wheel of the bike 20 to keep it upright.

Correspondingly, a bike holding device 104 of the bike carrier system 100 is different to the bike holding device 24 of the bike carrier system 10. The bike holding device 104 comprises a carrier fixation device 106 that slots onto a middle section of a bar element 108 of the bike support platform 110 for fixation to the rest of the bike carrier system 100.

The bike holding device 104 further comprises a rod element 112 that is pivotably attached with one end to the carrier fixation device 106. The rod element 112 is formed by a single piece such as a rod or bar. In the transport configuration, the rod element 112 is arranged essentially horizontally and/or parallel to the bar element 102 of the bike support platform 110. The rod element 112 is not in contact with a frame of the bike 20 in this position. The rod element 112 can be pivoted upwards toward the bike 20 arranged on the bike support platform 110 to adjust the bike carrier system 100 into its work stand configuration, as shown in Fig. 8. The rod element 112 thus engages the bike 20 from below, in the shown embodiment at a pedal hub of the frame of the bike 20. The bike 20 is thus at least partially lifted from the bike support platform 110, facilitating at least some basic maintenance work.

For example, the rod element 112 may only lift the rear wheel of the bike 20 away from the bike support platform 110, thus facilitating such maintenance work as adjusting a gear shifter of the bike 20. The bar element 102 can remain engaged to the front wheel of the bike 20, thus helping in keeping the bike 20 securely in place during maintenance. The bike holding device 104 does not comprise a clamping device, unlike the first embodiment. Instead, the rod element 112 may simply be formed to allow the pedal hub of the bike 20 to rest thereon, resulting in a simple design with few moving parts. In addition, adjustment between the configurations of the bike carrier system 100 is simple and does not require unloading of the bike 20. Instead, the rod element 112 may simply lift part of the bike 20 away from the bike support platform 110 and from its transport position.

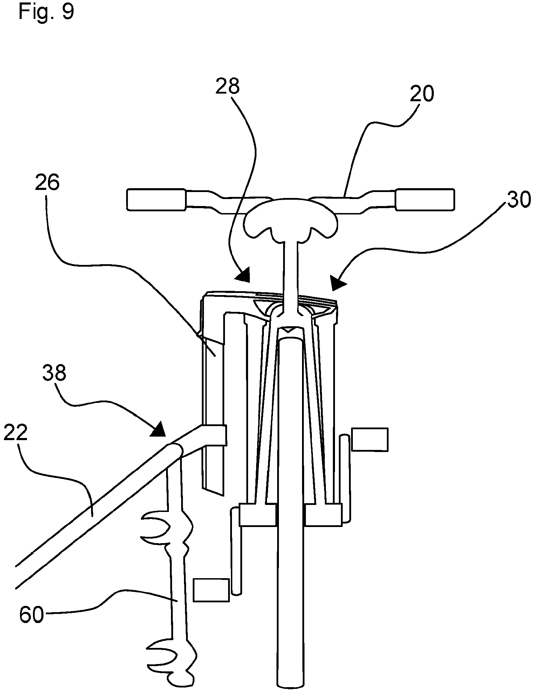

Figs. 9 to 11 show a second embodiment of the bike holding device 24 shown in Fig. 4 to 6. The second embodiment of the bike holding device 24 is also configured for attachment to the frame 22 of the bike carrier 16. Overall functionality and configuration are similar to the first embodiment, so only major differences will be described herein. The bike holding device 24 according to the second embodiment may also be mounted to the frame 22 of the bike carrier 16, either in addition to any bike holding arms or replacing at least one of the bike holding arms.

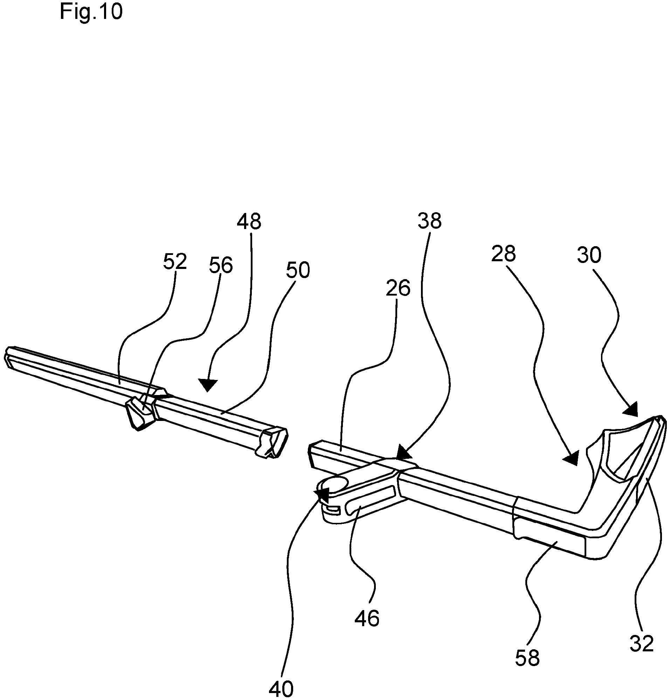

The rod element 26 of the second embodiment of the bike holding device 24 has a non-round shaped cross section, as can be seen in Fig. 10. Instead, its cross section is trapezoidal. This shape prevents unwanted rotation of the carrier fixation device 38 and bike fixation device 28 around the rod element 26.

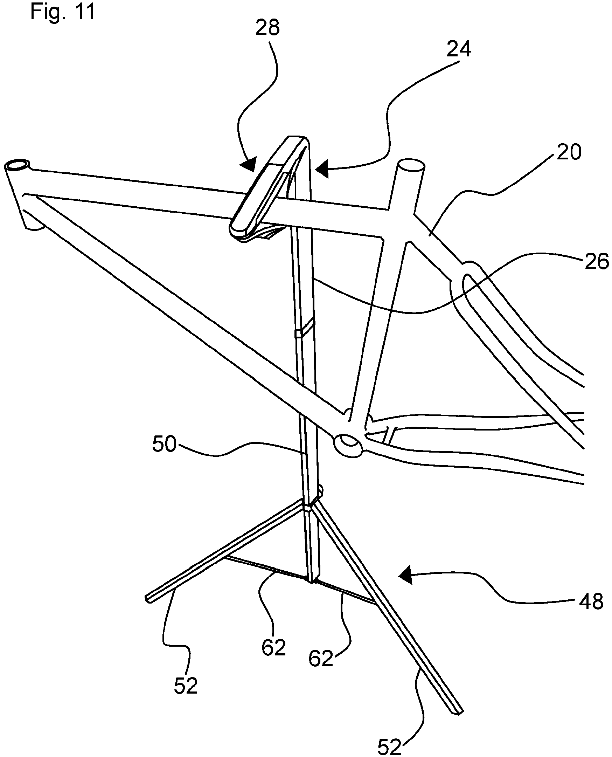

Further, Fig. 10 shows the pedestal device 48 detached from the rod element 26. The cross section of the rod element 50 of the pedestal device 48 corresponds to the cross section of the rod element 26. Thus, the pedestal device 48 may only be attached in one orientation to the rod element 26. It can therefore be ensured that the clamping device 30 and the pedestal device 48 are aligned, extending away in the same direction transversely from the rod element 26. A secure stand can thus be ensured, as has been described for a similar orientation shown for the first embodiment in Fig. 6 and as can be seen for this embodiment in Fig. 11.

Fig. 10 also shows the pedestal device 48 with the legs 52 folded onto the rod element 50, the pedestal device 48 therefore being collapsed. As can be taken from Fig. 10, the pedestal device 48 is therefore compact to store and transport independently of the rest of the bike holding device 24.

As can be taken from Fig. 9, the design of the bike fixation device 28 and its clamping device 30 of the bike holding device 24 according to the second embodiment is also different to the first embodiment. This clamping device 30 has a basic triangular cross section. Such a geometry allows for securely clamping of bikes with carbon frames, whose tubes are usually not round in cross section, in addition to bikes with frames with round tubes. Further, such a shape of the clamping device 30 may prevent unwanted rotation of the bike frame within the clamping device 30.

Fig. 11 illustrates how the second embodiment of the bike holding device 24 may also be used as a bike work stand independently of the bike carrier 16. For that purpose, the pedestal device 48 has now been attached to the rod element 26 und the legs 52 have been unfolded.

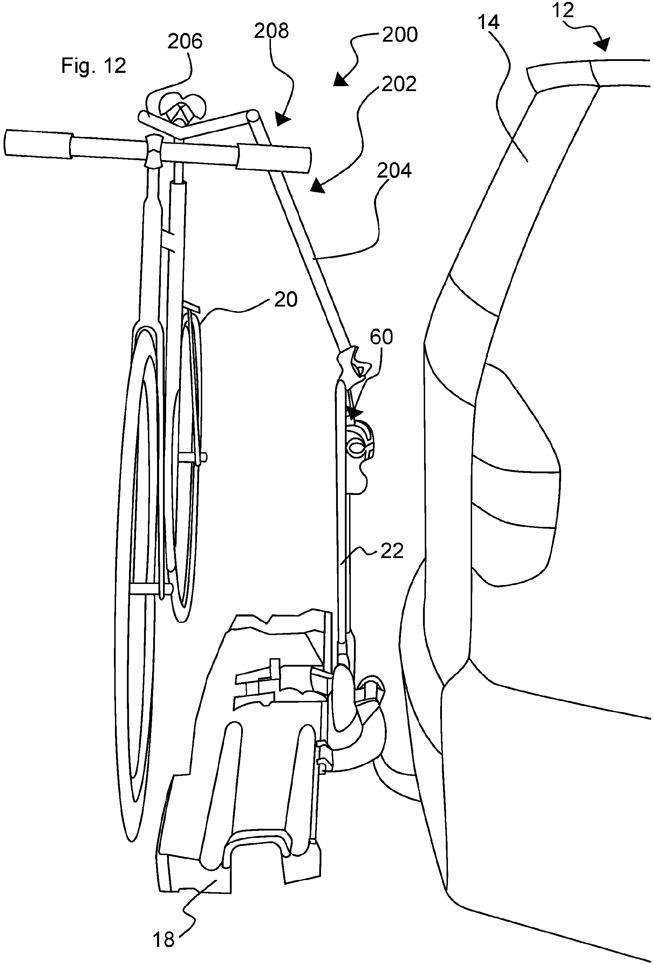

Fig. 12 shows a third embodiment of a bike carrier system 200. Overall structure is similar to the bike carrier system 10: The bike carrier system 200 is also configured for rear mounting to a motor vehicle 12. The bike carrier system 200 is also configured for adjustment, when mounted to the vehicle 12, between a transport configuration for transporting at least one bike 20 attached to the bike carrier system 200 and a work stand configuration, shown in Fig. 12, for performing maintenance on at least one bike 20 attached to the bike carrier system 200. The bike carrier system 200 also comprises a bike support platform 18. Wheels of the bike 20 may also be fixed to the bike support platform 18 with straps.

The bike carrier system 200 is primarily different to the bike carrier system 10 due to the design of the bike holding device 202. The bike holding device 202 comprises a rod arrangement 208 with a first rod element 204 and a second rod element 206 that are configured for telescopic extension of the bike holding device 202, although the length of the bike holding device 202 may be fixed in other embodiments. The first rod element 204 is pivotably attached to the frame 22 while being configured to be rotationally locked in place, although attachment of the bike holding device 202 may be fixed in other embodiments.

The second rod element 206 has a receiving portion with a V-shaped longitudinal extension, as can be seen in Fig. 12. A front part of the saddle of the bike 20 is resting on the second rod element 206 at a bottom of the receiving portion. The bike 20 is thus resting in a stable predetermined work position on the bike carrier system 200 respectively the rod arrangement 208 without requiring fixation. The bike 20 may simply be lifted and hung from the bike holding device 202 for washing and basic maintenance without requiring fixation. In some embodiments, the bike 20 may tilt forward when hung from the bike holding device 202, possibly even touching the ground with its front wheel instead of being fully suspended in the air by the bike holding device 202 like shown in Fig. 12.

As can be taken from Fig. 12, the bike 20 is spaced apart from the bike support platform 18 in the work stand configuration due to the extension of the bike holding device 202. In other embodiments, alternatively or additionally the bike 20 may be spaced apart due to the bike support platform 18 being adjusted into a tilted position, similar to what is shown in Fig. 2. The bike support platform 18 may also be pivoted further. In a simple embodiment, the bike holding device 202 may just comprise a single rod element with a receiving portion for the bike 20 resting on the bike holding device 202 in the transport configuration of the bike carrier system 200, such as a V-shaped part of the rod element. For example, a single tube or bar may be bended in a section to provide the receiving portion.

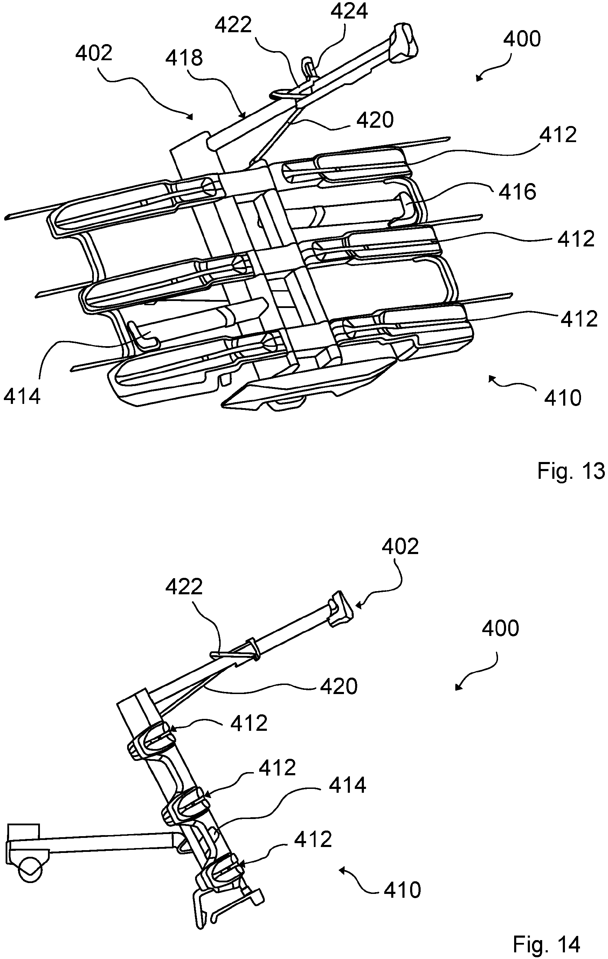

Figs. 13, 14 and 15 show a fourth embodiment of a bike carrier system 400. Overall structure is similar to the other bike carrier systems: The bike carrier system 400 is also configured for rear mounting to a motor vehicle 12. The bike carrier system 400 is also configured for adjustment, when mounted to the vehicle 12, between a transport configuration for transporting at least one bike 20 attached to the bike carrier system 400 (not shown) and a work stand configuration for performing maintenance on at least one bike 20 attached to the bike carrier system 400. The bike carrier system 400 also comprises a bike support platform 410.

As can be seen, the bike holding device 402 of the bike carrier system 400 is different to the other embodiments. The bike carrier system 400 is configured to transport up to three bikes standing upright the bike support platform 410 when the bike support platform 410 is adjusted into its first, essentially horizontal, position. For this purpose, the bike support platform has three individual bike trays 412 mounted to a frame spaced apart from each other. Rod elements 414, 416 and 418, each associated with one of the bike trays 412, are pivotably mounted to the frame. Each bike transported on a corresponding bike tray 412 can be held upright by one of the rod elements 414, 416 and 418 in the transport configuration. Each rod element 414, 416 and 418 is configured to clamp onto a part of the corresponding bike, such as onto a bike frame section or a seat post. At a free end, each of the rod elements 414, 416 and 418 comprises a clamping device to hold onto a bike.

Each rod element 414, 416 and 418 can individually be adjusted by pivoting between a use position and a stow position. In the stow position, the rod elements 414, 416 and 418 are arranged essentially parallel to the bike support platform 410 and the adjacent bike trays 412. The rod elements 414, 416 and 418 do not extend beyond a bike facing side of the trays 412. In the stow position, the rod elements 414, 416 and 418 cause less air resistance when driving the vehicle 12 with the mounted bike carrier system 400. In addition, the rod elements 414, 416 and 418 in the stow position do not interfere with loading and unloading of bikes, especially when using the bike carrier system 400 in the work stand configuration. In the use position, the rod elements 414, 416 and 418 may hold a corresponding bike. Rod element 418 is shown in the use position and essentially extends orthogonally to the bike support platform 410.

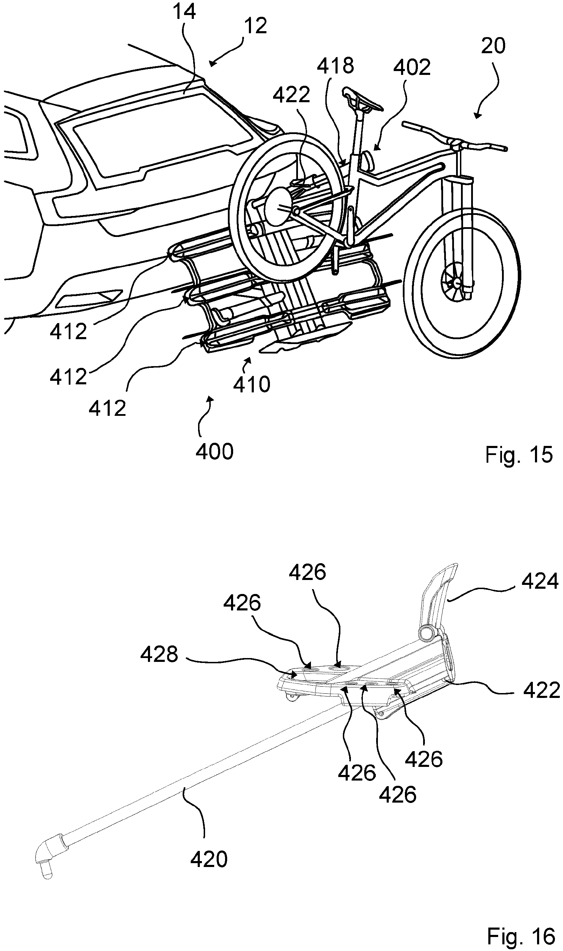

As can be seen in Fig. 15, the rod element 418 arranged at a vehicle facing side of the bike support platform 410 when the bike carrier system 400 is mounted to the vehicle 12 is configured for holding the bike 20 as a work stand. To adjust the bike carrier system 400 into the work stand configuration, the rod element 418 is adjusted into its use position and the bike support platform 410 is adjusted from its first, essentially horizontal, position into its second, tilted, position. As can best be seen in Fig. 14, the tilt axis of the bike support platform 410 extends in the left-right direction when the bike carrier system 400 is mounted to the vehicle 12 and is arranged at an end section opposite the vehicle facing side of the bike support platform 410. Thus, tilting the bike support platform 410 causes the rod element 418 to be shifted upwards and tilted away from the rear of the vehicle 12. In the tilted position, a vehicle facing side of the bike support platform 410 is arranged higher than in the essentially horizontal position while an opposite side may maintain its height or may be arranged lower. This provides additional clearance for the bike 20 from the ground and the vehicle 12 when using the bike carrier system 400 as a work stand. Unwanted contact of the bike 20 with the vehicle may thus be avoided. Further, the second position of the bike support platform 410 can be configured as a vehicle rear lid access position that may provide access to the rear lid 14 of the vehicle 12 even with the bike 20 mounted in the work stand configuration, as shown in Fig. 15. Overall, the bike support platform 410 is moved away from the rear lid 14 of the vehicle 12 when tilting the bike support platform 410 for position adjustment. The rod element 418 of the bike holding device 402 extends further away from the rear of the motor vehicle 12 in the work stand configuration than in the transport configuration of the bike carrier system 400 with the bike carrier system 400 mounted to the motor vehicle 12.

As can also be seen in Fig. 15, keeping the rod elements 414 and 416 arranged further away from the vehicle 12 than the rod element 418 in their stow position when using the bike carrier system 400 as a work stand avoids interference with the bike 20. In one embodiment, gravity may keep those rod elements 414 and 416 in the stow position even when tilting the bike support platform 410. In the use position, the rod elements 414, 416 and 418 will be fixed with their free ends each to a bike, thus keeping them in the use position. For example, the rod elements 414, 416 and 418 holding bikes in the transport configuration of the bike carrier system 400 just need to keep the bikes from tilting to their sides. Otherwise, the rod elements 414, 416 and 418 may be allowed to collapse back into their respective stow position under the influence of gravity. In another embodiment, the bike carrier system 400 may be provided with some form of locking device keeping the rod elements 414, 416 and 418 in their respective position.

The rod element 418, which holds the bike 20 in the work stand configuration, will be subject to high loads. In particular, during maintenance work, a user may push against the bike or even the rod element 418 itself in the pivoting direction towards the stow position. To withstand such high loads and to prevent the rod element 418 from collapsing into its stow position, the bike holding device 402 of bike carrier system 400 is reinforced.

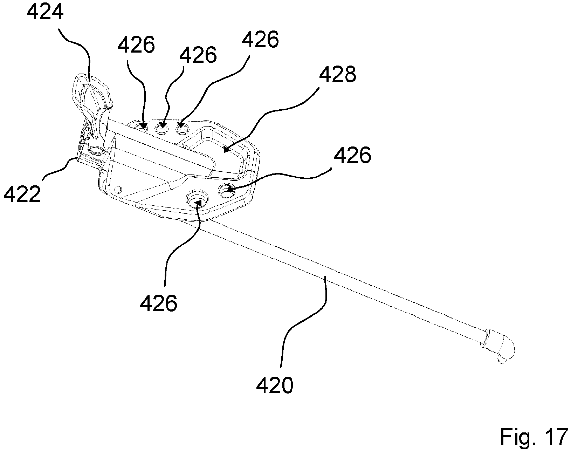

The components of the reinforcement, which can be provided as bike stand retrofit kit, are shown in isolation in Figs. 16 and 17. The bike holding device comprises an additional support rod 420. A first end of the support rod 420 is rotatably attached to the bike support platform 410 spaced away from an attachment of the rod element 418. For example, the first end of the support rod 420 comprises a pin that is slotted into a corresponding hole in the bike support platform. An opposite second end of the support rod 420 is adjustably attached along the length of the rod element 418. For that purpose, an attachment element in the form of a sleeve element 422 is arranged at the second end of the support rod 420. The rod element 418 is sheathed in the sleeve element 422, allowing the second end of the support rod 420 to slide along the rod element 418 when adjusting the rod element 418 between its stow position and its use position. The support rod 420 provides a lateral support for the bike holding device 402 with the rod element 418.

Further, a locking device is incorporated in the sleeve element 422. In the shown example, the locking device comprises a lever 424, which is shown in an open position in Figs. 16 and 17. The locking device is thus in its open state, allowing the sleeve element 422 to freely slide along the length of the rod element 418. When pushing down on the lever 424, the locking device is adjusted into its locked state. In the locked state, the sleeve element is fixed in place along the length of the rod element 418, for example by clamping and/or a form fit. Thus pivoting of the rod element 418 is blocked, keeping it in its use position. Further, loads acting on the rod element 418 may be additionally supported by the support rod 420, resulting in a very rigid bike holding device. In another configuration the locking device may be biased towards the locked state and/or may comprise a push-button for adjusting the locking device into its open state.

In one embodiment, the rod element 418 holding the bike 20 in the bike stand configuration is configured for length adjustment, in particular telescopic length adjustment. This allows to hold the bike 20 further away from the bike support platform 410 in the work stand configuration while still keeping differently sized bikes upright in the transport configuration. The other rod elements 414 and 416 may also be configured for length adjustment to hold differently sized bikes upright in the transport configuration. The adjustment range of the rod elements 414 and 416 may be less than that of the rod element 418 holding the bike 20 in the bike stand configuration in such a configuration. The retrofit kit may also comprise components, such as bars, to retrofit a length adjustment to a preexisting rod element at the vehicle facing side of the bike support platform 410 and/or to extend the adjustment range of such a preexisting rod element. The locking device may be configured to lock the length adjustment of the rod element 418 holding the bike 20 in the bike stand configuration, in particular with a form fit.

As can best be seen in Fig. 17, the sleeve element 422 comprises several through holes 426 and forms a tray 428. The through holes 426 form tool holders in the sleeve element 422. For example, a user may insert and store allen keys in the through holes 426 during bike maintenance work. The tray 428 may hold accessory, such as spare parts. For example, a user may place screws in the tray 428 during bike maintenance work. The sleeve element 422 is thus configured for providing an accessory and/or tool holder to the bike carrier system 400. The accessory and/or tool holder is integrally formed in the sleeve element 422 in the shown example. In another embodiment, it may be provided as a separate device. The accessory and/or tool holder is configured to be level with the ground when the rod element 418 is in its use position and the bike support platform 410 is in its tilted position when the bike carrier system 400 is mounted to the vehicle 12. In another embodiment, the accessory and/or tool holder is rotatably attached to the sleeve element 422 so that the accessory and/or tool holder self-levels in an essentially horizontal position.

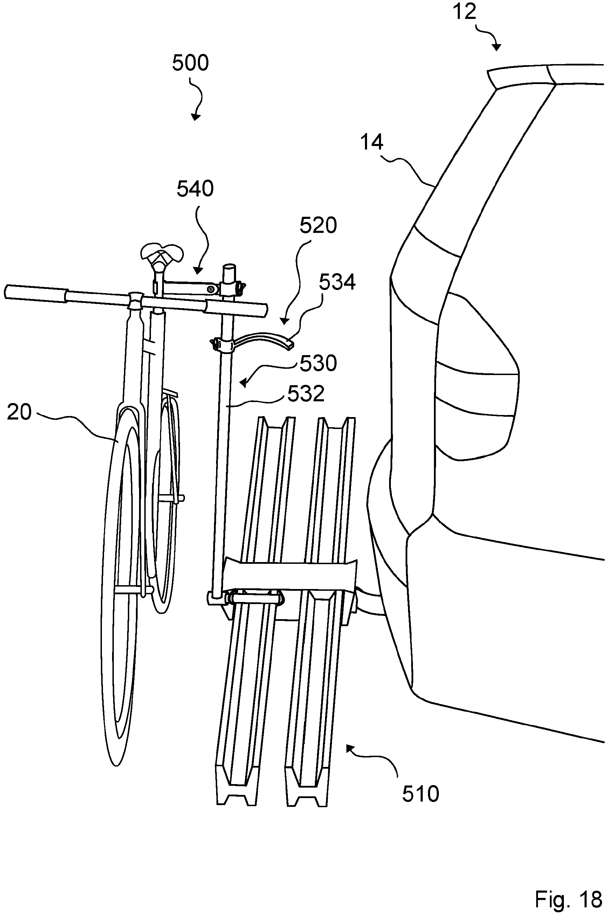

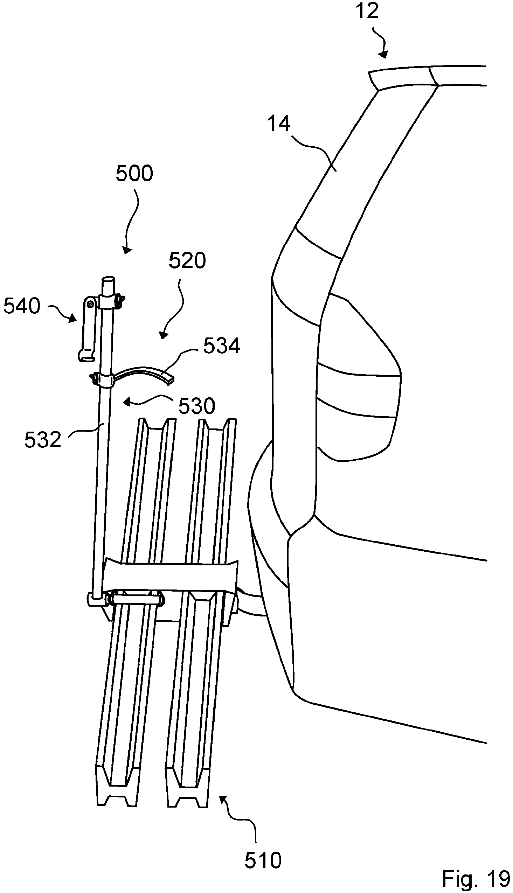

Figs. 18 and 19 show a fifth embodiment of a bike carrier system 500. Overall structure is similar to the other bike carrier systems: The bike carrier system 500 is also configured for rear mounting to a motor vehicle 12. The bike carrier system 500 is also configured for adjustment, when mounted to the vehicle 12, between a transport configuration for transporting at least one bike 20 attached to the bike carrier system 500 and a work stand configuration for performing maintenance on at least one bike 20 attached to the bike carrier system 500. The bike carrier system 500 also comprises a bike support platform 510. The bike support platform 510 of the bike carrier system 500 is non-adjustable. The bike support platform 510 of the bike carrier system 500 may not be tilted, unlike some of the other embodiments.

The bike carrier system 500 comprises a bike holding device 520. The bike holding device 520 comprises at least one bike fixation arm 530. The bike fixation arm 530 is attached to the bike support platform 510 at a side opposite the rear lid 14 of the vehicle 12, which is a side facing away from the vehicle 12. The bike fixation arm 530 comprises an upright rod 532 that extends essentially upwards away from the bike support platform 510 in the transport and work stand configuration, as shown in Figs. 18 and 19. A curved rod 534 extends from the rod 532 towards the rear lid 14 of the vehicle 12. A position of the curved rod 534 on the rod 532 may be adjusted by sliding the curved rod 534 along the length of the rod 532. A position of the curved rod 534 may be fixed in place on the rod 532, for example by means of a hand screw, as shown in Fig. 18, or by other fixation means. The bike fixation arm 530 is pivotably attached with one end to the bike support platform 510. In Fig. 18, the bike fixation arm 530 is shown in its essentially upright position. The bike fixation arm 530 is adjusted into the essentially upright position for the work stand configuration of the bike carrier system 500. The bike fixation arm 530 may be tilted in a position essentially parallel to the bike support platform 510, which corresponds to a stow position of the bike fixation arm 530. In the stow position, the upright rod 532 does not extend upright from the bike support platform 510 but rather parallel thereto.

In the transport configuration, the bike fixation arm 530 may be tilted towards a left or right side of the bike carrier system 500 (not shown). This facilitates bike fixation by pushing the curved rod 534 onto a wheel of the bike 20 to fix the bike 20 in place. The other wheel of the bike 20 may be fixed to the bike support platform 510 by other means, for example a strap not shown in Figs. 18 and 19. The bike fixation arm 530 may be fixed in place to the bike support platform 510, resulting in a simple and sturdy design. An attachment position of the bike fixation arm 530 to the bike support platform 510 may also be adjustable, for example allowing the bike fixation arm 530 to be slid from the central position shown in Fig. 18 towards the right end of the bike support platform 510. Such an adjustability may allow the use of a shorter rod 532 as the distance between bike fixation arm 530 attachment to the bike support platform 510 and the upper side of the wheel of the bike 20 for fixation by the curved rod 534 may be shorter. Additional fixation means for attaching the wheel to the bike fixation arm 530 may be provided to the curved rod 534, such as a strap.

The bike holding device 520 further comprises a rod element 540. The rod element 540 is attached to the upright rod 532 of the bike fixation arm 530. In the shown example, the rod element 540 is adjustably attached to the upright rod 532 of the bike fixation arm 530. The rod element 540 may be slid along the length of the upright rod 532 to adjust a height of the bike 20 held in the work stand configuration of the bike carrier system 500, which may be particular comfortable for the user and allows adaptation of the bike carrier system 500 work stand functionality to vehicles with different heights. The position of the rod element 540 may be fixed in place on the upright rod 532, for example by means of a hand screw, as shown in Fig. 18, or by other fixation means. Alternatively, the rod element 540 may be fixedly attached, for example at certain position at the end of the upright rod 532 opposite the bike support platform 510.

The rod element 540 is pivotably attached to the upright rod 532 of the bike fixation arm 532 in the embodiment shown in Fig. 18. Fig. 18 shows a use position of the rod element 540. In the use position the rod element 540 is configured to hold the bike 20 spaced apart from the bike support platform 510, for example at the seatpost of the bike 20. The use position of the rod element 540 provides the work stand functionality. In the use position, the rod element 540 extends essentially perpendicular from the upright rod 532 of the bike fixation arm 530 and away from the rear of the vehicle 12.

Fig. 19 shows a stow position of the rod element 540. In the stow position, the rod element 540 essentially extends parallel to the upright rod 532 of the bike fixation arm 530. The rod element 540 thus does not or only slightly extend beyond the bike support platform 510. The bike fixation arm 530 may thus easily be adjusted into its stow position. The rod element 540 orientation relative to the upright rod 532 of the bike fixation arm 530 may be fixed by tightening a hand screw or some other fixation means. The pivoting of the rod element 540 relative to the rod 532 of the bike fixation arm 530 and the optional adjustment of the rod element 540 along the upright rod 532 of the bike fixation arm 530 may be blocked by the same fixation means together.

The bike carrier system 500 may also comprise parts of the retrofit kit shown in Figs. 16 and 17. For example, the bike fixation arm 530 may be supported in its upright position by the support rod 420 to reenforce the bike holding device 520 in the work stand configuration of the bike carrier system 500. The support rod 420 may be adjustably attached at one end to the upright rod 532 of the bike fixation arm 530 with the sleeve element 422. The opposite end of the support rod 420 may be fixed to the bike support platform 510 spaced apart to the attachment of the bike fixation arm 530 or at least spaced apart from the attachment of the upright rod 532 of the bike fixation arm 530 to the bike support platform 510. The support rod 420 with the sleeve element 422 may also block pivoting of the bike fixation arm 530, similar to the bike carrier system 400.

The upright rod 532 of the bike fixation arm 530 may also be configured as a telescopic rod, allowing a length adjustment. The end of the rod element 540, configured for holding the bike 20, may comprise a clamp, strap or other means for holding the bike 20.

The bike holding device 520 of the bike carrier system 500 may comprise an additional bike fixation arm (not shown), which is configured to hold a second bike upright on the bike support platform 510 closer to the rear of the vehicle 12.

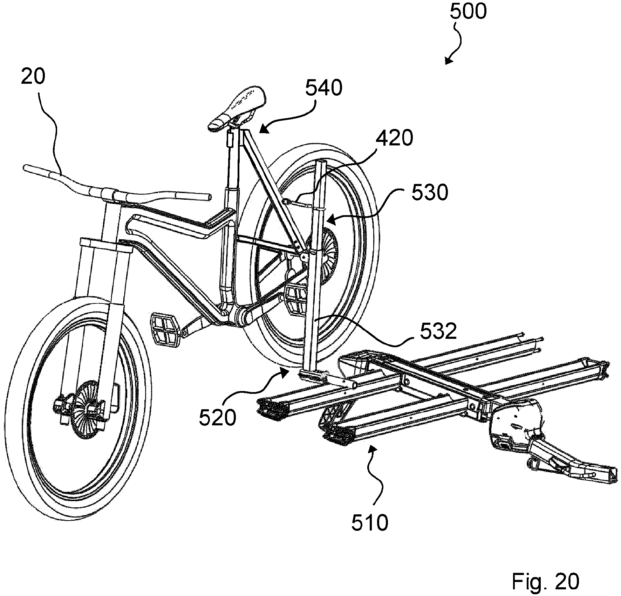

Fig. 20 shows a slightly different design of the bike carrier system 500 of Fig. 18. In Fig. 20, the bike carrier system 500 is shown in its work stand configuration. As can be seen, the upright rod 532 is configured as a telescopic rod in this configuration. Further, the rod element 540 is pivotably attached with one end to a middle section of the upright rod 532, which corresponds to an upper end of a lower segment of the upright rod 532. An opposite end of the rod element 540 is configured to hold the bike 20, as shown in Fig. 20. Fig. 20 does not show a curved rod 534, although such a rod may be attached to the upright rod 532 to hold the bike 20 upright on the bike support platform 510 in the transport configuration. Further, a locking device in its locked state may keep the upright rod 532 in the position as shown in Fig. 20. When released, said locking device may allow pivoting of the upright rod 532 and thus the bike holding device 520 in a stow position essentially parallel to the bike support platform 510.

The bike carrier system 500 of Fig. 20 comprises a support rod 420. The support rod element 420 is pivotably attached with one end to a middle section of the rod element 540. An opposite end of the support rod 420 comprises a hook. Alternatively, said end may comprise different attachment means, such as a magnet or strap. As shown in Fig. 20, the support rod 420 attached to the upright rod 532 with the hook prevents the rod element 540 from pivoting downwards into its stow position parallel to the upright rod 532. The support rod 420 thus locks the rod element 540 in its use position and helps inm supporting the bike 20 when providing the work stand function of the bike carrier system 500. The support rod 420 may be configured to also attach to the upright rod 532 or a part of the bike support platform 510 when the rod element 540 is arranged in its stow position, thus extending essentially parallel to the rod 532. This may prevent unwanted movement of the rod element 540 when the bike carrier system 500 is in its transport configuration.

## Claims

1. Bike carrier system (10; 100; 200; 400; 500) for rear mounting to a motor vehicle (12), in particular to a tow ball, fix point, hitch coupling and/or rear lid (14), wherein the bike carrier system (10; 100; 400; 500) is configured for adjustment, when mounted to the vehicle (12), between a transport configuration for transporting at least one bike (20) attached to the bike carrier system (10; 100) and a work stand configuration for performing maintenance on at least one bike (20) attached to the bike carrier system (10; 100; 200; 400; 500).

2. Bike carrier system (10; 100; 200; 400; 500) according to claim 1, wherein
the bike carrier system (10; 100; 200; 400; 500) comprises a bike support platform (18; 110; 410; 510) configured for supporting the at least one bike (20) attached to the system in the transport configuration, in particular with the bike (20) resting with its wheels on the platform (18; 110; 410; 510),
wherein,
in particular, the bike support platform (18; 110; 410) is configured for adjustment, in particular for a pivotable adjustment, between at least a first position and a second position,
in particular with an essentially horizontal position and/or a bike transport position as the first position and with a tilted position and/or a vehicle rear lid access position as the second position,
in particular wherein the tilted position of the bike support platform (18; 110; 410) with the bike carrier system (10; 100; 200; 400) mounted to the motor vehicle allows opening of a rear lid (14) of the vehicle (12) even with the at least one bike (20) attached to the bike carrier system (10; 100; 200; 400) and/or in particular wherein a vehicle facing side of the bike support platform (18; 110; 410) is tilted upwards and/or a side of the bike support platform opposite the vehicle facing side is tilted downwards and/or in particular wherein the bike support platform (18; 110; 410) is tilted away from the rear lid (14) of the vehicle (12) with the bike carrier system (10; 100; 200; 400) mounted to the motor vehicle when adjusting the bike support platform (18; 110; 410) from the essentially horizontal position to the tilted position.

3. Bike carrier system (10; 100; 200; 400) according to claim 2, wherein,
in the work stand configuration of the bike carrier system (10; 100; 200; 400), the bike support platform (18; 110; 410) is in the second position, in particular the tilted position and, in the transport configuration of the bike carrier system (10; 100; 200; 400), the bike support platform (18; 110; 410) is in the first position, in particular the essentially horizontal position
and/or
wherein adjustment of the bike carrier system (10; 100; 200; 400) from the transport configuration to the work stand configuration comprises adjusting the bike support platform (18; 110; 410) from the first position into the second position.

4. Bike carrier system (10; 100; 200; 400; 500) according to any one of the preceding claims, wherein
the bike carrier system (10; 100; 200; 400; 500) comprises a bike holding device (24; 104; 202; 402; 520) for attaching the at least one bike (20) to the bike carrier system (10; 100; 200; 400; 500), in particular comprising a rod element (26; 112; 206, 204; 414, 416, 418; 540) and/or configured to hold the bike both in the transport configuration and in the work stand configuration and/or comprising a bike support arm.

5. Bike carrier system (10; 100; 200; 400; 500) according to claim 4, wherein
the bike holding device (24; 104; 202; 402; 520), in particular the rod element (26; 112; 206, 204; 414, 416, 418; 540) of the bike holding device (24; 104; 202; 402; 520), is configured for the bike (20) resting on the bike holding device (24; 104; 202; 402; 520) in the transport configuration of the bike carrier system (10; 100; 200; 400; 500) and/or the work stand configuration of the bike carrier system (10; 100; 200; 400; 500), wherein, in particular, the bike holding device (24; 104; 202; 402; 520) is formed by the bike support platform (18; 110; 410; 510), a bike support frame (22), in particular extending essentially orthogonal from the bike support platform (18; 110; 410; 510), a vertical bike support arm, a hoop arm and/or other protruding part of the bike carrier system (10; 100; 200; 400; 500)
and/or
wherein the bike holding device (24; 202; 402; 520) is configured to hold the bike (20) upright on the bike support platform (18; 410; 510) in the transport configuration of the bike carrier system (10; 200; 400; 500)
and/or
wherein the bike holding device (24; 104; 202; 402; 520) is configured to hold bike (20) in the work stand configuration of the bike carrier system (10; 100; 200; 400; 500), in particular spaced away from the ground and/or the bike support platform (18; 110; 410; 510)
and/or wherein the bike holding device (24; 202; 402), in particular the rod element (26; 206, 204; 414, 416, 418) of the bike holding device, is attached to the bike support platform at the vehicle facing side of the bike support platform (18; 410) with the bike carrier system (10; 200; 400) mounted to the motor vehicle (12) or wherein the bike holding device (520), in particular an upright rod (532) of the bike holding device (520), is attached to the bike support platform at a side of the bike support platform (510) facing away from the vehicle with the bike carrier system (500) mounted to the motor vehicle (12)
and/or
wherein the bike holding device (24; 202; 402), in particular the rod element (26; 206, 204; 414, 416, 418) of the bike holding device (24; 202; 402), has a receiving portion configured for receiving the saddle and/or top tube of the bike (20) resting on the bike holding device (24; 202; 402) in the transport configuration of the bike carrier system (10; 200; 400),
in particular with the receiving portion having a V-shaped longitudinal extension and/or a trapezoidal-like cross-section.

6. Bike carrier system (10; 100; 200; 400; 500) according to claim 4 or 5,
wherein the bike holding device (24; 104; 202; 402; 520), in particular the rod element (26; 112; 206, 204; 414, 416, 418; 540) of the bike holding device (24; 104; 202; 402; 520), is configured to hold the bike further away from the rear of the motor vehicle (12) in the work stand configuration than in the transport configuration of the bike carrier system (10; 100; 200; 400; 500) with the bike carrier system (10; 100; 200; 400; 500) mounted to the motor vehicle (12)
and/or
wherein the bike holding device (24; 202; 402; 520), in particular the rod element (26;206, 204; 414, 416, 418; 540) of the bike holding device (24; 202; 402; 520), extends further away from the rear of the motor vehicle in the work stand configuration than in the transport configuration of the bike carrier system (10; 200; 400; 500) with the bike carrier system (10; 200; 400; 500) mounted to the motor vehicle (12)
and/or
wherein the bike holding device (24; 202; 402), in particular the rod element (26; 206, 204; 414, 416, 418) of the bike holding device (24; 202; 402), is arranged higher in the work stand configuration than in the transport configuration of the bike carrier system (10; 200; 400) with the bike carrier system (10; 200; 400) mounted to the motor vehicle, in particular due to adjusting of the bike support platform (18; 110; 410) in the tilted position with the bike carrier system (10; 200; 400) mounted to the motor vehicle (12)
and/or
wherein the bike holding device (24; 202; 402; 520), in particular the rod element (26; 206, 204; 418; 532) of the bike holding device (24; 202; 402; 520), extends transverse to a vertical orientation in the work stand configuration with the bike carrier system (10; 200; 400; 500) mounted to the motor vehicle
and/or
wherein the bike holding device (24; 202; 402; 520), in particular the rod element (26; 206, 204; 418; 532) of the bike holding device (24; 202; 402; 520), extends essentially vertical in the transport configuration with the bike carrier system (10; 200; 400; 500) mounted to the motor vehicle (12)
and/or
wherein the bike holding device (24; 202; 402), in particular the rod element (26; 206, 204; 418) of the bike holding device (24; 202; 402), extends essentially orthogonally to the bike support platform (18; 410) in the transport configuration and/or work stand configuration.

7. Bike carrier system (10; 100; 200; 400; 500) according to any one of the preceding claims 4 to 6, wherein
the bike holding device (24; 104; 202; 402; 520) comprises a bike fixation device (28), for example arranged at one end section of the rod element (26), in particular configured as a clamping device (30) and/or as a strap and/or as a slideably attached curved rod (534) and/or extending transversal to a longitudinal extension of the rod element (26), for releasably engaging a frame, a wheel and/or seat post of the at least one bike (20).

8. Bike carrier system (400; 500) according to any one preceding claims 4 to 7,
wherein the bike holding device is configured for adjustment between a use position and a stow position, in particular by pivoting the rod element (414, 416, 418) relative to the bike support platform (410; 510) and/or in particular wherein the bike holding device extends essentially perpendicular away from the bike support platform (410; 510) in the use position and/or in particular wherein the bike holding device (402; 520) extends essentially parallel along the bike support platform (410; 510) in the stow position
and/or
wherein the bike holding device (402; 520) comprises a locking device configured to lock the bike holding device in position, in particular relative to the bike support platform (410; 510) and/or in particular by preventing pivoting of the rod element (414, 416, 418) and/or a bike fixation arm (530) and/or in particular wherein the locking device comprises a support rod (420) attached with a first end to the bike carrier system (400, 500) spaced apart from the rod element (418; 540) and/or the bike fixation arm (520) and with an opposite second end, in particular comprising an attachment element, such as a sleeve element (422), attached to the rod element (418) and/or a part of a bike fixation arm (520), such as an upright rod (532), at an adjustable position,
and/or
wherein the bike holding device (402) is configured for length adjustment, in particular with the rod element (418) being configured as a telescopic rod element and/or in particular comprising a length fixation device, such as a clamp or friction fit, in particular with the length fixation device integrated into the attachment element (422) attaching the second end of the support rod (422) to the rod element (418) and/or the bike fixation arm (530)
and/or
wherein the bike holding device comprises an accessory and/or tool holder, in particular being formed by the attachment element (422) attaching the second end of the support rod to the rod element (418) and/or the bike fixation arm (530) and/or being integrated into the length fixation device and/or in particular having at least one trough hole for receiving a tool and/or forming a tray, in particular wherein the bike holding device is configured to provide the accessory and/or tool holding functionality in the work stand configuration and/or transport configuration.

9. Bike holding device (24; 104; 202; 402; 520) for a bike carrier (16) rear mountable to a motor vehicle (12), wherein
the bike holding device (24; 104; 202; 402; 520) is configured for releasable attachment to a bike carrier (16), in particular as part of the bike carrier system (10; 100; 200; 400; 500) according to any one of the preceding claims,
and the bike holding device (24; 104; 202; 402; 520) is configured to hold at least one bike (20) in a position for performing maintenance on the at least one bike (20), in particular when the bike holding device (24; 104; 202; 402; 520) is attached to the bike carrier (16) and the bike carrier (16) is mounted to the vehicle (12) and/or when the bike holding device (24; 104; 202) is standing on the ground.

10. Bike stand retrofit kit for a bike carrier (16) rear mountable to a motor vehicle (12), in particular wherein the bike carrier (16) comprises a bike support platform (410) and a bike holding device (402),
wherein the retrofit kit is configured to provide to the bike carrier (16) an adjustment function between a transport configuration for transporting at least one bike (20) attached to the bike carrier (16) and a work stand configuration for performing maintenance on at least one bike (20) attached to the bike carrier when the bike carrier is mounted to the vehicle (12) and the retrofit kit is mounted to the bike carrier.

11. Bike stand retrofit kit according to claim 10,
wherein the retrofit kit comprises a locking device, in particular forming part of the bike holding device when the retrofit kit is mounted to the bike carrier (16), configured to lock the bike holding device in position relative to the bike support platform (410),
in particular configured to prevent pivoting of the bike holding device relative to the bike support platform (410) in its locked state
and/or
in particular configured to prevent length adjustment of the bike holding device (402) in its locked state
and/or
in particular configured to prevent movement of an attachment element (422) of the retrofit kit along a rod element (418) and/or a bike fixation arm (530) of the bike holding device
and/or
wherein the retrofit kit comprises a rod element (418), in particular a telescopic length adjustable rod element (420), configured to replace a rod element (418) of the bike holding device and/or to attach to the rod element and/or the bike fixation arm (530) of the bike holding device and/or configured for attachment to the bike fixation arm (530), in particular at an end opposite the bike support platform (510) and/or with a pivotable attachment.

12. Bike stand retrofit kit according to claim 11,
wherein the locking device comprises a support rod (420) attachable with a first end to the bike carrier system (400) spaced apart from the rod element and with an opposite second end attachable to the rod element (420) at an adjustable position, in particular with an attachment element, such as a sleeve element (422), attachable to a rod element (418) of the bike holding device,
and/or
wherein the locking device comprises an adjustment device, in particular comprising a lever (424), clamp and/or quick release button, configured to adjust the locking device between a locked state and a release state
and/or
wherein the retrofit kit is configured for replacing an arm of the bike carrier (16) configured for holding the at least one bike (20) essentially upright during transport with the vehicle (12).

13. Bike stand retrofit kit according to claim 12 or 13,
the retrofit kit is configured for providing an accessory and/or tool holder to the bike carrier (16) when mounted to the bike carrier (16),
in particular wherein the accessory and/or tool holder is provided by the attachment element (422) of the retrofit kit
and/or
in particular wherein the accessory and/or tool holder is provided at least in the transport configuration of the bike carrier (16) when the retrofit kit is mounted to the bike carrier (16).

14. Bike carrier (16) rear mountable to a motor vehicle (12), the bike carrier in particular comprising a bike support platform (18; 110; 410; 510) and a bike holding device, wherein the bike carrier (16) is configured for receiving a bike stand retrofit kit according to any one of claims 1 to 13.

15. Use of a bike carrier system (10; 100; 200; 400; 500) for rear mounting to a motor vehicle (12) and/or a bike holding device (24; 104; 202; 402; 520) for a bike carrier (16) rear mountable to a motor vehicle (12), in particular of the bike carrier system (10; 100; 200; 400; 500) according to any of claims 1 to 8 and/or the bike holding device (24; 104; 202; 402; 520) according to claim 9 and/or of the bike carrier according to claim 14 with the retrofit kit according to any of claims 10 to 13, to transport at least one bike (20) attached to the bike carrier system (10; 100; 200; 400; 500) with the motor vehicle (12) and as a work stand for performing maintenance on at least one bike (20) attached to the bike carrier system (10; 100; 200; 400; 500), in particular wherein the use of the bike carrier system (10; 100; 200; 400; 500) and/or bike holding device (24; 104; 202; 402; 520) comprises a step of adjusting the bike carrier system (10; 100; 200; 400; 500) and/or bike holding device (24; 104; 202; 402; 520) between a transport configuration and a work stand configuration.

## Amended claims

### Amended claims in accordance with Rule 137(2) EPC.

**1.** Bike carrier system (10; 100; 200; 400; 500) for rear mounting to a motor vehicle (12), wherein the bike carrier system (10; 100; 400; 500) is configured for adjustment, when mounted to the vehicle (12), between a transport configuration for transporting at least one bike (20) attached to the bike carrier system (10; 100) and a work stand configuration for performing maintenance on at least one bike (20) attached to the bike carrier system (10; 100; 200; 400; 500),
wherein, in the work stand configuration, the bike carrier system (10; 100; 200; 400; 500) is configured to hold the at least one bike (20) so that at least one of the wheels of the at least one bike is essentially free to rotate around its axle,
wherein the bike carrier system (10; 100; 200; 400; 500) comprises a bike holding device (24; 104; 202; 402; 520) for attaching the at least one bike (20) to the bike carrier system (10; 100; 200; 400; 500), configured to hold the bike both in the transport configuration and in the work stand configuration.

**2.** Bike carrier system (10; 100; 200; 400; 500) according to claim 1, wherein
the bike carrier system (10; 100; 200; 400; 500) comprises a bike support platform (18; 110; 410; 510) configured for supporting the at least one bike (20) attached to the system in the transport configuration.

**3.** Bike carrier system (10; 100; 200; 400) according to claim 2, wherein,
in the work stand configuration of the bike carrier system (10; 100; 200; 400), the bike support platform (18; 110; 410) is in the second position and, in the transport configuration of the bike carrier system (10; 100; 200; 400), the bike support platform (18; 110; 410) is in the first position.

**4.** Bike carrier system (10; 100; 200; 400; 500) according to any one of the preceding claims, wherein
the bike holding device (24; 104; 202; 402; 520) comprising a rod element (26; 112; 206, 204; 414, 416, 418; 540) and/or comprising a bike support arm.

**5.** Bike carrier system (10; 100; 200; 400; 500) according to any one of the preceding claims, wherein
the bike holding device (24; 104; 202; 402; 520) is configured for the bike (20) resting on the bike holding device (24; 104; 202; 402; 520) in the transport configuration of the bike carrier system (10; 100; 200; 400; 500) and/or the work stand configuration of the bike carrier system (10; 100; 200; 400; 500)
and/or
wherein the bike holding device (24; 202; 402; 520) is configured to hold the bike (20) upright on the bike support platform (18; 410; 510) in the transport configuration of the bike carrier system (10; 200; 400; 500)
and/or
wherein the bike holding device (24; 104; 202; 402; 520) is configured to hold bike (20) in the work stand configuration of the bike carrier system (10; 100; 200; 400; 500), spaced away from the ground and/or the bike support platform (18; 110; 410; 510) and/or
wherein the bike holding device (24; 202; 402) has a receiving portion configured for receiving the saddle and/or top tube of the bike (20) resting on the bike holding device (24; 202; 402) in the transport configuration of the bike carrier system (10; 200; 400).

**6.** Bike carrier system (10; 100; 200; 400; 500) according to any one of the preceding claims,
wherein the bike holding device (24; 104; 202; 402; 520) is configured to hold the bike further away from the rear of the motor vehicle (12) in the work stand configuration than in the transport configuration of the bike carrier system (10; 100; 200; 400; 500) with the bike carrier system (10; 100; 200; 400; 500) mounted to the motor vehicle (12)
and/or
wherein the bike holding device (24; 202; 402; 520) extends further away from the rear of the motor vehicle in the work stand configuration than in the transport configuration of the bike carrier system (10; 200; 400; 500) with the bike carrier system (10; 200; 400; 500) mounted to the motor vehicle (12).

**7.** Bike carrier system (10; 100; 200; 400; 500) according to any one of the preceding claims, wherein
the bike holding device (24; 104; 202; 402; 520) comprises a bike fixation device (28)for releasably engaging a frame, a wheel and/or seat post of the at least one bike (20).

**8.** Bike carrier system (400; 500) according to any one preceding claims,
wherein the bike holding device is configured for adjustment between a use position and a stow position
and/or
wherein the bike holding device (402; 520) comprises a locking device configured to lock the bike holding device in position.

**9.** Bike holding device (24; 104; 202; 402; 520) for a bike carrier (16) rear mountable to a motor vehicle (12), wherein
the bike holding device (24; 104; 202; 402; 520) is configured for releasable attachment to a bike carrier (16),
and the bike holding device (24; 104; 202; 402; 520) is configured to hold at least one bike (20) in a position for performing maintenance on the at least one bike (20) when the bike holding device (24; 104; 202; 402; 520) is attached to the bike carrier (16) and the bike carrier (16) is mounted to the vehicle (12) and/or when the bike holding device (24; 104; 202) is standing on the ground,
wherein, in the work stand configuration, the bike carrier (16) is configured to hold the at least one bike (20) so that at least one of the wheels of the at least one bike is essentially free to rotate around its axle,
wherein the bike holding device (24; 104; 202; 402; 520) is configured to hold the bike both in the transport configuration and in the work stand configuration.

**10.** Bike stand retrofit kit for a bike carrier (16) rear mountable to a motor vehicle (12) wherein the bike carrier (16) comprises a bike holding device (402),
wherein the retrofit kit is configured to provide to the bike carrier (16) an adjustment function between a transport configuration for transporting at least one bike (20) attached to the bike carrier (16) and a work stand configuration for performing maintenance on at least one bike (20) attached to the bike carrier when the bike carrier is mounted to the vehicle (12) and the retrofit kit is mounted to the bike carrier,
wherein, in the work stand configuration, the bike carrier (16) is configured to hold the at least one bike (20) so that at least one of the wheels of the at least one bike is essentially free to rotate around its axle, wherein the bike holding device (24; 104; 202; 402; 520) is configured to hold the bike both in the transport configuration and in the work stand configuration.

**11.** Bike stand retrofit kit according to claim 10,
wherein the retrofit kit comprises a locking device configured to lock the bike holding device in position relative to the bike support platform (410).

**12.** Bike stand retrofit kit according to claim 11,
wherein the locking device comprises a support rod (420) attachable with a first end to the bike carrier system (400) spaced apart from the rod element and with an opposite second end attachable to the rod element (420) at an adjustable position and/or
wherein the retrofit kit is configured for replacing an arm of the bike carrier (16) configured for holding the at least one bike (20) essentially upright during transport with the vehicle (12).

**13.** Bike stand retrofit kit according to claim 12 or 13,
the retrofit kit is configured for providing an accessory and/or tool holder to the bike carrier (16) when mounted to the bike carrier (16).

**14.** Bike carrier (16) rear mountable to a motor vehicle (12), the bike carrier comprising a bike holding device,
wherein the bike carrier (16) is configured for receiving a bike stand retrofit kit according to any one of claims 1 to 13.

**15.** Use of a bike carrier system (10; 100; 200; 400; 500) for rear mounting to a motor vehicle (12) with a bike holding device (24; 104; 202; 402; 520) to transport at least one bike (20) attached to the bike carrier system (10; 100; 200; 400; 500) with the motor vehicle (12) and as a work stand for performing maintenance on at least one bike (20) attached to the bike carrier system (10; 100; 200; 400; 500),
wherein the use of the bike carrier system (10; 100; 200; 400; 500) comprises a step of adjusting the bike carrier system (10; 100; 200; 400; 500) and/or bike holding device (24; 104; 202; 402; 520) between a transport configuration and a work stand configuration,
wherein, in the work stand configuration, the bike carrier system (10; 100; 200; 400; 500) is configured to hold the at least one bike (20) so that at least one of the wheels of the at least one bike is essentially free to rotate around its axle,
wherein the bike holding device (24; 104; 202; 402; 520) is configured to hold the bike both in the transport configuration and in the work stand configuration.

**1.** Bike carrier system (10; 100; 200; 400; 500) for rear mounting to a motor vehicle (12), wherein the bike carrier system (10; 100; 400; 500) is configured for adjustment, when mounted to the vehicle (12), between a transport configuration for transporting at least one bike (20) attached to the bike carrier system (10; 100) and a work stand configuration for performing maintenance on at least one bike (20) attached to the bike carrier system (10; 100; 200; 400; 500),
wherein, in the work stand configuration, the bike carrier system (10; 100; 200; 400; 500) is configured to hold the at least one bike (20) so that at least one of the wheels of the at least one bike is essentially free to rotate around its axle,
wherein, in the transport configuration, the bike carrier system (10; 100; 200; 400; 500) is configured for essentially immovably holding the at least one bike (20),
wherein the bike carrier system (10; 100; 200; 400; 500) comprises a bike holding device (24; 104; 202; 402; 520) for attaching the at least one bike (20) to the bike carrier system (10; 100; 200; 400; 500), configured to hold the bike both in the transport configuration and in the work stand configuration.

**2.** Bike carrier system (10; 100; 200; 400; 500) according to claim 1, wherein
the bike carrier system (10; 100; 200; 400; 500) comprises a bike support platform (18; 110; 410; 510) configured for supporting the at least one bike (20) attached to the system in the transport configuration.

**3.** Bike carrier system (10; 100; 200; 400) according to claim 2, wherein,
in the work stand configuration of the bike carrier system (10; 100; 200; 400), the bike support platform (18; 110; 410) is in the second position and, in the transport configuration of the bike carrier system (10; 100; 200; 400), the bike support platform (18; 110; 410) is in the first position.

**4.** Bike carrier system (10; 100; 200; 400; 500) according to any one of the preceding claims, wherein
the bike holding device (24; 104; 202; 402; 520) comprising a rod element (26; 112; 206, 204; 414, 416, 418; 540) and/or comprising a bike support arm.

**5.** Bike carrier system (10; 100; 200; 400; 500) according to any one of the preceding claims, wherein
the bike holding device (24; 104; 202; 402; 520) is configured for the bike (20) resting on the bike holding device (24; 104; 202; 402; 520) in the transport configuration of the bike carrier system (10; 100; 200; 400; 500) and/or the work stand configuration of the bike carrier system (10; 100; 200; 400; 500)
and/or
wherein the bike holding device (24; 202; 402; 520) is configured to hold the bike (20) upright on the bike support platform (18; 410; 510) in the transport configuration of the bike carrier system (10; 200; 400; 500)
and/or
wherein the bike holding device (24; 104; 202; 402; 520) is configured to hold bike (20) in the work stand configuration of the bike carrier system (10; 100; 200; 400; 500), spaced away from the ground and/or the bike support platform (18; 110; 410; 510) and/or
wherein the bike holding device (24; 202; 402) has a receiving portion configured for receiving the saddle and/or top tube of the bike (20) resting on the bike holding device (24; 202; 402) in the transport configuration of the bike carrier system (10; 200; 400).

**6.** Bike carrier system (10; 100; 200; 400; 500) according to any one of the preceding claims,
wherein the bike holding device (24; 104; 202; 402; 520) is configured to hold the bike further away from the rear of the motor vehicle (12) in the work stand configuration than in the transport configuration of the bike carrier system (10; 100; 200; 400; 500) with the bike carrier system (10; 100; 200; 400; 500) mounted to the motor vehicle (12)
and/or
wherein the bike holding device (24; 202; 402; 520) extends further away from the rear of the motor vehicle in the work stand configuration than in the transport configuration of the bike carrier system (10; 200; 400; 500) with the bike carrier system (10; 200; 400; 500) mounted to the motor vehicle (12).

**7.** Bike carrier system (10; 100; 200; 400; 500) according to any one of the preceding claims, wherein
the bike holding device (24; 104; 202; 402; 520) comprises a bike fixation device (28)for releasably engaging a frame, a wheel and/or seat post of the at least one bike (20).

**8.** Bike carrier system (400; 500) according to any one preceding claims,
wherein the bike holding device is configured for adjustment between a use position and a stow position
and/or
wherein the bike holding device (402; 520) comprises a locking device configured to lock the bike holding device in position.

**9.** Bike holding device (24; 104; 202; 402; 520) for a bike carrier (16) rear mountable to a motor vehicle (12), wherein
the bike holding device (24; 104; 202; 402; 520) is configured for releasable attachment to a bike carrier (16),
and the bike holding device (24; 104; 202; 402; 520) is configured to hold at least one bike (20) in a position for performing maintenance on the at least one bike (20) when the bike holding device (24; 104; 202; 402; 520) is attached to the bike carrier (16) and the bike carrier (16) is mounted to the vehicle (12) and/or when the bike holding device (24; 104; 202) is standing on the ground,
wherein, in the work stand configuration, the bike carrier (16) is configured to hold the at least one bike (20) so that at least one of the wheels of the at least one bike is essentially free to rotate around its axle,
wherein, in the transport configuration, the bike carrier (16) is configured for essentially immovably holding the at least one bike (20),
wherein the bike holding device (24; 104; 202; 402; 520) is configured to hold the bike both in the transport configuration and in the work stand configuration.

**10.** Bike stand retrofit kit for a bike carrier (16) rear mountable to a motor vehicle (12) wherein the bike carrier (16) comprises a bike holding device (402),
wherein the retrofit kit is configured to provide to the bike carrier (16) an adjustment function between a transport configuration for transporting at least one bike (20) attached to the bike carrier (16) and a work stand configuration for performing maintenance on at least one bike (20) attached to the bike carrier when the bike carrier is mounted to the vehicle (12) and the retrofit kit is mounted to the bike carrier, wherein, in the work stand configuration, the bike carrier (16) is configured to hold the at least one bike (20) so that at least one of the wheels of the at least one bike is essentially free to rotate around its axle,
wherein, in the transport configuration, the bike carrier (16) is configured for essentially immovably holding the at least one bike (20),
wherein the bike holding device (24; 104; 202; 402; 520) is configured to hold the bike both in the transport configuration and in the work stand configuration.

**11.** Bike stand retrofit kit according to claim 10,
wherein the retrofit kit comprises a locking device configured to lock the bike holding device in position relative to the bike support platform (410).

**12.** Bike stand retrofit kit according to claim 11,
wherein the locking device comprises a support rod (420) attachable with a first end to the bike carrier system (400) spaced apart from the rod element and with an opposite second end attachable to the rod element (420) at an adjustable position and/or
wherein the retrofit kit is configured for replacing an arm of the bike carrier (16) configured for holding the at least one bike (20) essentially upright during transport with the vehicle (12).

**13.** Bike stand retrofit kit according to claim 12 or 13,
the retrofit kit is configured for providing an accessory and/or tool holder to the bike carrier (16) when mounted to the bike carrier (16).

**14.** Bike carrier (16) rear mountable to a motor vehicle (12), the bike carrier comprising a bike holding device,
wherein the bike carrier (16) is configured for receiving a bike stand retrofit kit according to any one of claims 1 to 13.

**15.** Use of a bike carrier system (10; 100; 200; 400; 500) for rear mounting to a motor vehicle (12) with a bike holding device (24; 104; 202; 402; 520) to transport at least one bike (20) attached to the bike carrier system (10; 100; 200; 400; 500) with the motor vehicle (12) and as a work stand for performing maintenance on at least one bike (20) attached to the bike carrier system (10; 100; 200; 400; 500),
wherein the use of the bike carrier system (10; 100; 200; 400; 500) comprises a step of adjusting the bike carrier system (10; 100; 200; 400; 500) and/or bike holding device (24; 104; 202; 402; 520) between a transport configuration and a work stand configuration,
wherein, in the work stand configuration, the bike carrier system (10; 100; 200; 400; 500) is configured to hold the at least one bike (20) so that at least one of the wheels of the at least one bike is essentially free to rotate around its axle,
wherein, in the transport configuration, the bike carrier system (10; 100; 200; 400; 500) is configured for essentially immovably holding the at least one bike (20),
wherein the bike holding device (24; 104; 202; 402; 520) is configured to hold the bike both in the transport configuration and in the work stand configuration.

**1.** Bike carrier system (10; 100; 200; 400; 500) for rear mounting to a motor vehicle (12), wherein the bike carrier system (10; 100; 400; 500) is configured for adjustment, when mounted to the vehicle (12), between a transport configuration for transporting at least one bike (20) attached to the bike carrier system (10; 100) and a work stand configuration for performing maintenance on at least one bike (20) attached to the bike carrier system (10; 100; 200; 400; 500),
wherein the bike carrier system (10; 100; 200; 400; 500) comprises a bike holding device (24; 104; 202; 402; 520) for attaching the at least one bike (20) to the bike carrier system (10; 100; 200; 400; 500), configured to hold the bike both in the transport configuration and in the work stand configuration.

**2.** Bike carrier system (10; 100; 200; 400; 500) according to claim 1, wherein
the bike carrier system (10; 100; 200; 400; 500) comprises a bike support platform (18; 110; 410; 510) configured for supporting the at least one bike (20) attached to the system in the transport configuration.

**3.** Bike carrier system (10; 100; 200; 400) according to claim 2, wherein,
in the work stand configuration of the bike carrier system (10; 100; 200; 400), the bike support platform (18; 110; 410) is in the second position and, in the transport configuration of the bike carrier system (10; 100; 200; 400), the bike support platform (18; 110; 410) is in the first position

**4.** Bike carrier system (10; 100; 200; 400) according to claim 2 or 3,
wherein adjustment of the bike carrier system (10; 100; 200; 400) from the transport configuration to the work stand configuration comprises adjusting the bike support platform (18; 110; 410) from the first position into the second position.

**5.** Bike carrier system (10; 100; 200; 400; 500) according to any one of the preceding claims, wherein
the bike holding device (24; 104; 202; 402; 520) comprising a rod element (26; 112; 206, 204; 414, 416, 418; 540) and/or comprising a bike support arm.

**6.** Bike carrier system (10; 100; 200; 400; 500) according to any one of the preceding claims, wherein
the bike holding device (24; 104; 202; 402; 520) is configured for the bike (20) resting on the bike holding device (24; 104; 202; 402; 520) in the transport configuration of the bike carrier system (10; 100; 200; 400; 500) and/or the work stand configuration of the bike carrier system (10; 100; 200; 400; 500).

**7.** Bike carrier system (10; 200; 400; 500) according to any one of the preceding claims,
wherein the bike holding device (24; 202; 402; 520) is configured to hold the bike (20) upright on the bike support platform (18; 410; 510) in the transport configuration of the bike carrier system (10; 200; 400; 500)

**8.** Bike carrier system (10; 100; 200; 400; 500) according to any one of the preceding claims,
wherein the bike holding device (24; 104; 202; 402; 520) is configured to hold bike (20) in the work stand configuration of the bike carrier system (10; 100; 200; 400; 500), spaced away from the ground and/or the bike support platform (18; 110; 410; 510)

**9.** Bike carrier system (10; 100; 200; 400; 500) according to any one of the preceding claims,
wherein the bike holding device (24; 202; 402) has a receiving portion configured for receiving the saddle and/or top tube of the bike (20) resting on the bike holding device (24; 202; 402) in the transport configuration of the bike carrier system (10; 200; 400).

**10.** Bike carrier system (10; 100; 200; 400; 500) according to any one of the preceding claims,
wherein the bike holding device (24; 104; 202; 402; 520) is configured to hold the bike further away from the rear of the motor vehicle (12) in the work stand configuration than in the transport configuration of the bike carrier system (10; 100; 200; 400; 500) with the bike carrier system (10; 100; 200; 400; 500) mounted to the motor vehicle (12).

**11.** Bike carrier system (10; 200; 400; 500) according to any one of the preceding claims,
wherein the bike holding device (24; 202; 402; 520) extends further away from the rear of the motor vehicle in the work stand configuration than in the transport configuration of the bike carrier system (10; 200; 400; 500) with the bike carrier system (10; 200; 400; 500) mounted to the motor vehicle (12).

**12.** Bike carrier system (10; 100; 200; 400; 500) according to any one of the preceding claims, wherein
the bike holding device (24; 104; 202; 402; 520) comprises a bike fixation device (28)for releasably engaging a frame, a wheel and/or seat post of the at least one bike (20).

**13.** Bike carrier system (400; 500) according to any one preceding claims,
wherein the bike holding device is configured for adjustment between a use position and a stow position.

**14.** Bike carrier system (10; 100; 200; 400; 500) according to any one of the preceding claims,
wherein the bike holding device (402; 520) comprises a locking device configured to lock the bike holding device in position.

**15.** Use of a bike carrier system (10; 100; 200; 400; 500) for rear mounting to a motor vehicle (12) with a bike holding device (24; 104; 202; 402; 520) to transport at least one bike (20) attached to the bike carrier system (10; 100; 200; 400; 500) with the motor vehicle (12) and as a work stand for performing maintenance on at least one bike (20) attached to the bike carrier system (10; 100; 200; 400; 500),
wherein the use of the bike carrier system (10; 100; 200; 400; 500) comprises a step of adjusting the bike carrier system (10; 100; 200; 400; 500) and/or bike holding device (24; 104; 202; 402; 520) between a transport configuration and a work stand configuration,
wherein the bike holding device (24; 104; 202; 402; 520) is configured to hold the bike both in the transport configuration and in the work stand configuration.

**1.** Bike carrier system (10; 100; 200; 400; 500) for rear mounting to a motor vehicle (12), wherein the bike carrier system (10; 100; 400; 500) is configured for adjustment, when mounted to the vehicle (12), between a transport configuration for transporting at least one bike (20) attached to the bike carrier system (10; 100) and a work stand configuration for performing maintenance on at least one bike (20) attached to the bike carrier system (10; 100; 200; 400; 500),
wherein, in the work stand configuration, the bike carrier system (10; 100; 200; 400; 500) is configured to hold the at least one bike (20) so that at least one of the wheels of the at least one bike is essentially free to rotate around its axle,
wherein the bike carrier system (10; 100; 200; 400; 500) comprises a bike holding device (24; 104; 202; 402; 520) for attaching the at least one bike (20) to the bike carrier system (10; 100; 200; 400; 500), configured to hold the bike both in the transport configuration and in the work stand configuration.

**2.** Bike carrier system (10; 100; 200; 400; 500) according to claim 1, wherein
the bike carrier system (10; 100; 200; 400; 500) comprises a bike support platform (18; 110; 410; 510) configured for supporting the at least one bike (20) attached to the system in the transport configuration.

**3.** Bike carrier system (10; 100; 200; 400) according to claim 2, wherein,
in the work stand configuration of the bike carrier system (10; 100; 200; 400), the bike support platform (18; 110; 410) is in the second position and, in the transport configuration of the bike carrier system (10; 100; 200; 400), the bike support platform (18; 110; 410) is in the first position

**4.** Bike carrier system (10; 100; 200; 400) according to claim 2 or 3,
wherein adjustment of the bike carrier system (10; 100; 200; 400) from the transport configuration to the work stand configuration comprises adjusting the bike support platform (18; 110; 410) from the first position into the second position.

**5.** Bike carrier system (10; 100; 200; 400; 500) according to any one of the preceding claims, wherein
the bike holding device (24; 104; 202; 402; 520) comprising a rod element (26; 112; 206, 204; 414, 416, 418; 540) and/or comprising a bike support arm.

**6.** Bike carrier system (10; 100; 200; 400; 500) according to any one of the preceding claims, wherein
the bike holding device (24; 104; 202; 402; 520) is configured for the bike (20) resting on the bike holding device (24; 104; 202; 402; 520) in the transport configuration of the bike carrier system (10; 100; 200; 400; 500) and/or the work stand configuration of the bike carrier system (10; 100; 200; 400; 500).

**7.** Bike carrier system (10; 200; 400; 500) according to any one of the preceding claims,
wherein the bike holding device (24; 202; 402; 520) is configured to hold the bike (20) upright on the bike support platform (18; 410; 510) in the transport configuration of the bike carrier system (10; 200; 400; 500)

**8.** Bike carrier system (10; 100; 200; 400; 500) according to any one of the preceding claims,
wherein the bike holding device (24; 104; 202; 402; 520) is configured to hold bike (20) in the work stand configuration of the bike carrier system (10; 100; 200; 400; 500), spaced away from the ground and/or the bike support platform (18; 110; 410; 510).

**9.** Bike carrier system (10; 100; 200; 400; 500) according to any one of the preceding claims,
wherein the bike holding device (24; 202; 402) has a receiving portion configured for receiving the saddle and/or top tube of the bike (20) resting on the bike holding device (24; 202; 402) in the transport configuration of the bike carrier system (10; 200; 400).

**10.** Bike carrier system (10; 100; 200; 400; 500) according to any one of the preceding claims,
wherein the bike holding device (24; 104; 202; 402; 520) is configured to hold the bike further away from the rear of the motor vehicle (12) in the work stand configuration than in the transport configuration of the bike carrier system (10; 100; 200; 400; 500) with the bike carrier system (10; 100; 200; 400; 500) mounted to the motor vehicle (12).

**11.** Bike carrier system (10; 200; 400; 500) according to any one of the preceding claims, wherein the bike holding device (24; 202; 402; 520) extends further away from the rear of the motor vehicle in the work stand configuration than in the transport configuration of the bike carrier system (10; 200; 400; 500) with the bike carrier system (10; 200; 400; 500) mounted to the motor vehicle (12).

**12.** Bike carrier system (10; 100; 200; 400; 500) according to any one of the preceding claims, wherein
the bike holding device (24; 104; 202; 402; 520) comprises a bike fixation device (28)for releasably engaging a frame, a wheel and/or seat post of the at least one bike (20).

**13.** Bike carrier system (400; 500) according to any one preceding claims,
wherein the bike holding device is configured for adjustment between a use position and a stow position.

**14.** Bike carrier system (10; 100; 200; 400; 500) according to any one of the preceding claims,
wherein the bike holding device (402; 520) comprises a locking device configured to lock the bike holding device in position.

**15.** Use of a bike carrier system (10; 100; 200; 400; 500) for rear mounting to a motor vehicle (12) with a bike holding device (24; 104; 202; 402; 520) to transport at least one bike (20) attached to the bike carrier system (10; 100; 200; 400; 500) with the motor vehicle (12) and as a work stand for performing maintenance on at least one bike (20) attached to the bike carrier system (10; 100; 200; 400; 500),
wherein the use of the bike carrier system (10; 100; 200; 400; 500) comprises a step of adjusting the bike carrier system (10; 100; 200; 400; 500) and/or bike holding device (24; 104; 202; 402; 520) between a transport configuration and a work stand configuration,
wherein, in the work stand configuration, the bike carrier system (10; 100; 200; 400; 500) is configured to hold the at least one bike (20) so that at least one of the wheels of the at least one bike is essentially free to rotate around its axle,
wherein the bike holding device (24; 104; 202; 402; 520) is configured to hold the bike both in the transport configuration and in the work stand configuration.

**1.** Bike carrier system (10; 100; 200; 400; 500) for rear mounting to a motor vehicle (12), wherein the bike carrier system (10; 100; 400; 500) is configured for adjustment, when mounted to the vehicle (12), between a transport configuration for transporting at least one bike (20) attached to the bike carrier system (10; 100) and a work stand configuration for performing maintenance on at least one bike (20) attached to the bike carrier system (10; 100; 200; 400; 500),
wherein, in the work stand configuration, the bike carrier system (10; 100; 200; 400; 500) is configured to hold the at least one bike (20) so that at least one of the wheels of the at least one bike is essentially free to rotate around its axle,
wherein, in the transport configuration, the bike carrier system (10; 100; 200; 400; 500) is configured for essentially immovably holding the at least one bike (20),
wherein the bike carrier system (10; 100; 200; 400; 500) comprises a bike holding device (24; 104; 202; 402; 520) for attaching the at least one bike (20) to the bike carrier system (10; 100; 200; 400; 500), configured to hold the bike both in the transport configuration and in the work stand configuration.

**2.** Bike carrier system (10; 100; 200; 400; 500) according to claim 1, wherein
the bike carrier system (10; 100; 200; 400; 500) comprises a bike support platform (18; 110; 410; 510) configured for supporting the at least one bike (20) attached to the system in the transport configuration.

**3.** Bike carrier system (10; 100; 200; 400) according to claim 2, wherein,
in the work stand configuration of the bike carrier system (10; 100; 200; 400), the bike support platform (18; 110; 410) is in the second position and, in the transport configuration of the bike carrier system (10; 100; 200; 400), the bike support platform (18; 110; 410) is in the first position

**4.** Bike carrier system (10; 100; 200; 400) according to claim 2 or 3,
wherein adjustment of the bike carrier system (10; 100; 200; 400) from the transport configuration to the work stand configuration comprises adjusting the bike support platform (18; 110; 410) from the first position into the second position.

**5.** Bike carrier system (10; 100; 200; 400; 500) according to any one of the preceding claims, wherein
the bike holding device (24; 104; 202; 402; 520) comprising a rod element (26; 112; 206, 204; 414, 416, 418; 540) and/or comprising a bike support arm.

**6.** Bike carrier system (10; 100; 200; 400; 500) according to any one of the preceding claims, wherein
the bike holding device (24; 104; 202; 402; 520) is configured for the bike (20) resting on the bike holding device (24; 104; 202; 402; 520) in the transport configuration of the bike carrier system (10; 100; 200; 400; 500) and/or the work stand configuration of the bike carrier system (10; 100; 200; 400; 500).

**7.** Bike carrier system (10; 200; 400; 500) according to any one of the preceding claims,
wherein the bike holding device (24; 202; 402; 520) is configured to hold the bike (20) upright on the bike support platform (18; 410; 510) in the transport configuration of the bike carrier system (10; 200; 400; 500)

**8.** Bike carrier system (10; 100; 200; 400; 500) according to any one of the preceding claims,
wherein the bike holding device (24; 104; 202; 402; 520) is configured to hold bike (20) in the work stand configuration of the bike carrier system (10; 100; 200; 400; 500), spaced away from the ground and/or the bike support platform (18; 110; 410; 510).

**9.** Bike carrier system (10; 100; 200; 400; 500) according to any one of the preceding claims,
wherein the bike holding device (24; 202; 402) has a receiving portion configured for receiving the saddle and/or top tube of the bike (20) resting on the bike holding device (24; 202; 402) in the transport configuration of the bike carrier system (10; 200; 400).

**10.** Bike carrier system (10; 100; 200; 400; 500) according to any one of the preceding claims,
wherein the bike holding device (24; 104; 202; 402; 520) is configured to hold the bike further away from the rear of the motor vehicle (12) in the work stand configuration than in the transport configuration of the bike carrier system (10; 100; 200; 400; 500) with the bike carrier system (10; 100; 200; 400; 500) mounted to the motor vehicle (12).

**11.** Bike carrier system (10; 200; 400; 500) according to any one of the preceding claims,
wherein the bike holding device (24; 202; 402; 520) extends further away from the rear of the motor vehicle in the work stand configuration than in the transport configuration of the bike carrier system (10; 200; 400; 500) with the bike carrier system (10; 200; 400; 500) mounted to the motor vehicle (12).

**12.** Bike carrier system (10; 100; 200; 400; 500) according to any one of the preceding claims, wherein
the bike holding device (24; 104; 202; 402; 520) comprises a bike fixation device (28)for releasably engaging a frame, a wheel and/or seat post of the at least one bike (20).

**13.** Bike carrier system (400; 500) according to any one preceding claims,
wherein the bike holding device is configured for adjustment between a use position and a stow position.

**14.** Bike carrier system (10; 100; 200; 400; 500) according to any one of the preceding claims,
wherein the bike holding device (402; 520) comprises a locking device configured to lock the bike holding device in position.

**15.** Use of a bike carrier system (10; 100; 200; 400; 500) for rear mounting to a motor vehicle (12) with a bike holding device (24; 104; 202; 402; 520) to transport at least one bike (20) attached to the bike carrier system (10; 100; 200; 400; 500) with the motor vehicle (12) and as a work stand for performing maintenance on at least one bike (20) attached to the bike carrier system (10; 100; 200; 400; 500),
wherein the use of the bike carrier system (10; 100; 200; 400; 500) comprises a step of adjusting the bike carrier system (10; 100; 200; 400; 500) and/or bike holding device (24; 104; 202; 402; 520) between a transport configuration and a work stand configuration,
wherein, in the work stand configuration, the bike carrier system (10; 100; 200; 400; 500) is configured to hold the at least one bike (20) so that at least one of the wheels of the at least one bike is essentially free to rotate around its axle,
wherein, in the transport configuration, the bike carrier system (10; 100; 200; 400; 500) is configured for essentially immovably holding the at least one bike (20),
wherein the bike holding device (24; 104; 202; 402; 520) is configured to hold the bike both in the transport configuration and in the work stand configuration.

**1.** Bike carrier system (10; 100; 200; 400; 500) for rear mounting to a motor vehicle (12), wherein the bike carrier system (10; 100; 400; 500) is configured for adjustment, when mounted to the vehicle (12), between a transport configuration for transporting at least one bike (20) attached to the bike carrier system (10; 100) and a work stand configuration for performing maintenance on at least one bike (20) attached to the bike carrier system (10; 100; 200; 400; 500),
wherein the bike carrier system (10; 100; 200; 400; 500) comprises a bike holding device (24; 104; 202; 402; 520) for attaching the at least one bike (20) to the bike carrier system (10; 100; 200; 400; 500), configured to hold the bike both in the transport configuration and in the work stand configuration.

**2.** Bike carrier system (10; 100; 200; 400; 500) according to claim 1, wherein
the bike carrier system (10; 100; 200; 400; 500) comprises a bike support platform (18; 110; 410; 510) configured for supporting the at least one bike (20) attached to the system in the transport configuration.

**3.** Bike carrier system (10; 100; 200; 400) according to claim 2, wherein,
in the work stand configuration of the bike carrier system (10; 100; 200; 400), the bike support platform (18; 110; 410) is in the second position and, in the transport configuration of the bike carrier system (10; 100; 200; 400), the bike support platform (18; 110; 410) is in the first position.

**4.** Bike carrier system (10; 100; 200; 400; 500) according to any one of the preceding claims, wherein
the bike holding device (24; 104; 202; 402; 520) comprising a rod element (26; 112; 206, 204; 414, 416, 418; 540) and/or comprising a bike support arm.

**5.** Bike carrier system (10; 100; 200; 400; 500) according to any one of the preceding claims, wherein
the bike holding device (24; 104; 202; 402; 520) is configured for the bike (20) resting on the bike holding device (24; 104; 202; 402; 520) in the transport configuration of the bike carrier system (10; 100; 200; 400; 500) and/or the work stand configuration of the bike carrier system (10; 100; 200; 400; 500)
and/or
wherein the bike holding device (24; 202; 402; 520) is configured to hold the bike (20) upright on the bike support platform (18; 410; 510) in the transport configuration of the bike carrier system (10; 200; 400; 500)
and/or
wherein the bike holding device (24; 104; 202; 402; 520) is configured to hold bike (20) in the work stand configuration of the bike carrier system (10; 100; 200; 400; 500), spaced away from the ground and/or the bike support platform (18; 110; 410; 510) and/or
wherein the bike holding device (24; 202; 402) has a receiving portion configured for receiving the saddle and/or top tube of the bike (20) resting on the bike holding device (24; 202; 402) in the transport configuration of the bike carrier system (10; 200; 400).

**6.** Bike carrier system (10; 100; 200; 400; 500) according to any one of the preceding claims,
wherein the bike holding device (24; 104; 202; 402; 520) is configured to hold the bike further away from the rear of the motor vehicle (12) in the work stand configuration than in the transport configuration of the bike carrier system (10; 100; 200; 400; 500) with the bike carrier system (10; 100; 200; 400; 500) mounted to the motor vehicle (12)
and/or
wherein the bike holding device (24; 202; 402; 520) extends further away from the rear of the motor vehicle in the work stand configuration than in the transport configuration of the bike carrier system (10; 200; 400; 500) with the bike carrier system (10; 200; 400; 500) mounted to the motor vehicle (12).

**7.** Bike carrier system (10; 100; 200; 400; 500) according to any one of the preceding claims, wherein
the bike holding device (24; 104; 202; 402; 520) comprises a bike fixation device (28)for releasably engaging a frame, a wheel and/or seat post of the at least one bike (20).

**8.** Bike carrier system (400; 500) according to any one preceding claims,
wherein the bike holding device is configured for adjustment between a use position and a stow position
and/or
wherein the bike holding device (402; 520) comprises a locking device configured to lock the bike holding device in position.

**9.** Bike holding device (24; 104; 202; 402; 520) for a bike carrier (16) rear mountable to a motor vehicle (12), wherein
the bike holding device (24; 104; 202; 402; 520) is configured for releasable attachment to a bike carrier (16),
and the bike holding device (24; 104; 202; 402; 520) is configured to hold at least one bike (20) in a position for performing maintenance on the at least one bike (20) when the bike holding device (24; 104; 202; 402; 520) is attached to the bike carrier (16) and the bike carrier (16) is mounted to the vehicle (12) and/or when the bike holding device (24; 104; 202) is standing on the ground,
wherein the bike holding device (24; 104; 202; 402; 520) is configured to hold the bike both in the transport configuration and in the work stand configuration.

**10.** Bike stand retrofit kit for a bike carrier (16) rear mountable to a motor vehicle (12) wherein the bike carrier (16) comprises a bike holding device (402),
wherein the retrofit kit is configured to provide to the bike carrier (16) an adjustment function between a transport configuration for transporting at least one bike (20) attached to the bike carrier (16) and a work stand configuration for performing maintenance on at least one bike (20) attached to the bike carrier when the bike carrier is mounted to the vehicle (12) and the retrofit kit is mounted to the bike carrier, wherein the bike holding device (24; 104; 202; 402; 520) is configured to hold the bike both in the transport configuration and in the work stand configuration.

**11.** Bike stand retrofit kit according to claim 10,
wherein the retrofit kit comprises a locking device configured to lock the bike holding device in position relative to the bike support platform (410).

**12.** Bike stand retrofit kit according to claim 11,
wherein the locking device comprises a support rod (420) attachable with a first end to the bike carrier system (400) spaced apart from the rod element and with an opposite second end attachable to the rod element (420) at an adjustable position and/or
wherein the retrofit kit is configured for replacing an arm of the bike carrier (16) configured for holding the at least one bike (20) essentially upright during transport with the vehicle (12).

**13.** Bike stand retrofit kit according to claim 12 or 13,
the retrofit kit is configured for providing an accessory and/or tool holder to the bike carrier (16) when mounted to the bike carrier (16).

**14.** Bike carrier (16) rear mountable to a motor vehicle (12), the bike carrier comprising a bike holding device,
wherein the bike carrier (16) is configured for receiving a bike stand retrofit kit according to any one of claims 1 to 13.

**15.** Use of a bike carrier system (10; 100; 200; 400; 500) for rear mounting to a motor vehicle (12) with a bike holding device (24; 104; 202; 402; 520) to transport at least one bike (20) attached to the bike carrier system (10; 100; 200; 400; 500) with the motor vehicle (12) and as a work stand for performing maintenance on at least one bike (20) attached to the bike carrier system (10; 100; 200; 400; 500),
wherein the use of the bike carrier system (10; 100; 200; 400; 500) comprises a step of adjusting the bike carrier system (10; 100; 200; 400; 500) and/or bike holding device (24; 104; 202; 402; 520) between a transport configuration and a work stand configuration,
wherein the bike holding device (24; 104; 202; 402; 520) is configured to hold the bike both in the transport configuration and in the work stand configuration.
